# EUROPÄISCHE PATENTSCHRIFT

(11) **EP 2 164 721 B1**
(45) Veröffentlichungstag und Bekanntmachung des Hinweises auf die Patenterteilung: **07.10.2015**
(21) Anmeldenummer: 07724806.0
(22) Anmeldetag: 03.05.2007
(51) Int. Cl.: B60K 5/12, F16F 13/26

(54) **VERFAHREN UND VORRICHTUNG ZUR BETRIEBSSITUATIONSABHÄNGIGEN EINSTELLUNG DER SCHWINGUNGSEIGENSCHAFTEN VON LAGERELEMENTEN ZUR LAGERUNG EINES AGGREGATS, INSBESONDERE EINER BRENNKRAFTMASCHINE UND/ODER EINES GETRIEBES, IN EINEM KRAFTFAHRZEUG**
METHOD AND DEVICE FOR ADJUSTING, ACCORDING TO THE OPERATING SITUATION, THE VIBRATIONAL PROPERTIES OF BEARING ELEMENTS FOR MOUNTING A UNIT, ESPECIALLY AN INTERNAL COMBUSTION ENGINE AND/OR A TRANSMISSION, IN A MOTOR VEHICLE
PROCÉDÉ ET UN DISPOSITIF POUR RÉGLER, EN FONCTION DE LA SITUATION DE FONCTIONNEMENT, LES PROPRIÉTÉS VIBRATOIRES D'ÉLÉMENTS PALIER DESTINÉS À SUPPORTER UN ORGANE, NOTAMMENT UN MOTEUR À COMBUSTION INTERNE ET/OU UNE BOÎTE DE VITESSES, DANS UN VÉHICULE À MOTEUR

(43) Veröffentlichungstag der Anmeldung: 24.03.2010
(73) Patentinhaber: Dr. Ing. h.c. F. Porsche AG, 70435 Stuttgart (DE)
(72) Erfinder: BROBEIL, Thorsten, 72108 Rottenburg (DE); STARK, Hans-Jochen, 73249 Wernau (DE); KOCH, Thorsten, 71701 Schwieberdingen (DE); UJHASI, Marco, 71272 Renningen (DE); BODIE, Mark, O., Dayton, OH 45410 (US); BARTA, David, J., Beavercreek, OH 45434 (US)
(86) Internationale Anmeldenummer: PCT/EP2007/003880
(87) Internationale Veröffentlichungsnummer: WO 2008/135057

(56) Entgegenhaltungen:
- EP-A- 0 939 244
- WO-A-2005/001308
- DE-A1- 10 233 783

## Beschreibung

Die vorliegende Erfindung betrifft ein Verfahren und eine Vorrichtung zur betriebssituationsabhängigen Einstellung der Schwingungseigenschaften von Lagerelementen zur Lagerung eines Aggregats, insbesondere einer Brennkraftmaschine und/oder eines Getriebes, in einem Kraftfahrzeug.

Aus der DE 102 33 783 A1 oder der DE 102 52 384 B1 ist es bekannt bekannt, die Schwingungseigenschaften von Lagerelementen zur Lagerung eines Aggregats, insbesondere einer Brennkraftmaschine und/oder eines Getriebes, in einem Kraftfahrzeug in Abhängigkeit von einer jeweiligen Betriebssituation zu verändern.

Aus der EP 1 258 650 A2 ist ein hydraulisches Lagerelement bekannt, dass eine Arbeitskammer und eine Ausgleichskammer aufweist zwischen denen ein magnetorheologisches Fluid reziprokierbar ist. Zwischen Arbeitskammer und Ausgleichskammer ist eine Ventilplatte vorgesehen, die durch eine elektrisch steuerbare Magnetspule geschlossen (Strom/Magnetfeld ein) bzw. geöffnet (Strom/Magnetfeld aus) werden kann. Somit können Steifigkeit und Dämpfung durch gezieltes Schließen und Öffnen der Ventilplatte in Abhängigkeit der Lagerbewegung gesteuert werden. Typische Schaltzeiten liegen dabei im Millisekundenbereich, und typische Steuerströme liegen zwischen 0A (minimale Steifigkeit/Dämpfung) und 5A (maximale Steifigkeit/Dämpfung).

Aus der EP0939244A2 ist eine Vorrichtung zur betriebssituationsabhängigen Einstellung der Schwingungseigenschaften von Lagerelementen mit allen Merkmalen des Oberbegriffs der Ansprüche 1 und 12 bekannt.

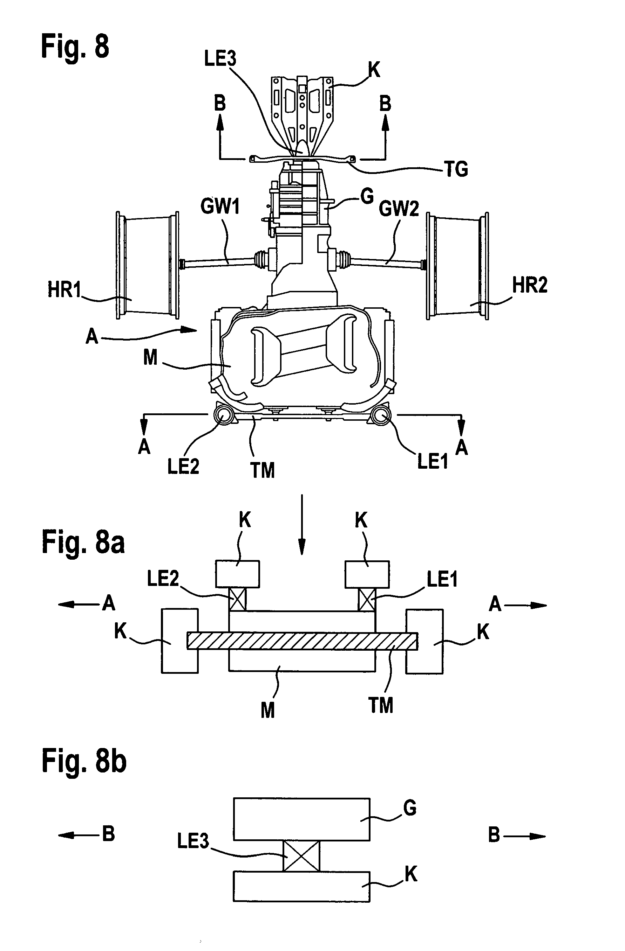

Fig. 8,8a,8b sind eine jeweilige schematische Darstellung einer bekannten Aggregatanordnung in einem Kraftfahrzeug, und zwar Fig. 8 in Draufsicht und Fig. 8a,b in zwei unterschiedlichen senkrechten Schnittansichten gemäß Line A-A bzw. B-B in Fig. 8.

Gemäß Figur 8 ist ein Aggregat A eines Kraftfahrzeugs dargestellt, das einen Motorenbereich M und einen Getriebebereich G aufweist. Angeflanscht an den Getriebebereich G sind die Gelenkwellen GW1, GW2 der Hinterachse, woran das linke und rechte Hinterrad HR1 bzw. HR2 befestigt sind. Bezugszeichen TG bezeichnet einen Getriebeträger und K eine Karosserie. Bezugszeichen TM ist ein Motorträger, der an der Karosserie K und am Motor M befestigt ist. Die Bezugszeichen LE1, LE2, LE3 sind herkömmliche passive Lagerelemente, und zwar LE1, LE2 Motorlager und LE3 ein Getriebelager.

Figur 8a bzw. Figur 8b zeigen Schnittdarstellungen zur Erläuterung der Auflage der Aggregatsteile auf die Lagerelemente LE1, LE2 bzw. LE3 in zwei unterschiedlichen senkrechten Schnitten gemäß Line A-A bzw. B-B in Fig. 8.

Fig. 9 ist eine schematische Darstellung der Frequenzabhängigkeit der passiven hydraulischen Lagerelemente der bekannten Aggregatanordnung in einem Kraftfahrzeug gemäß Fig. 8.

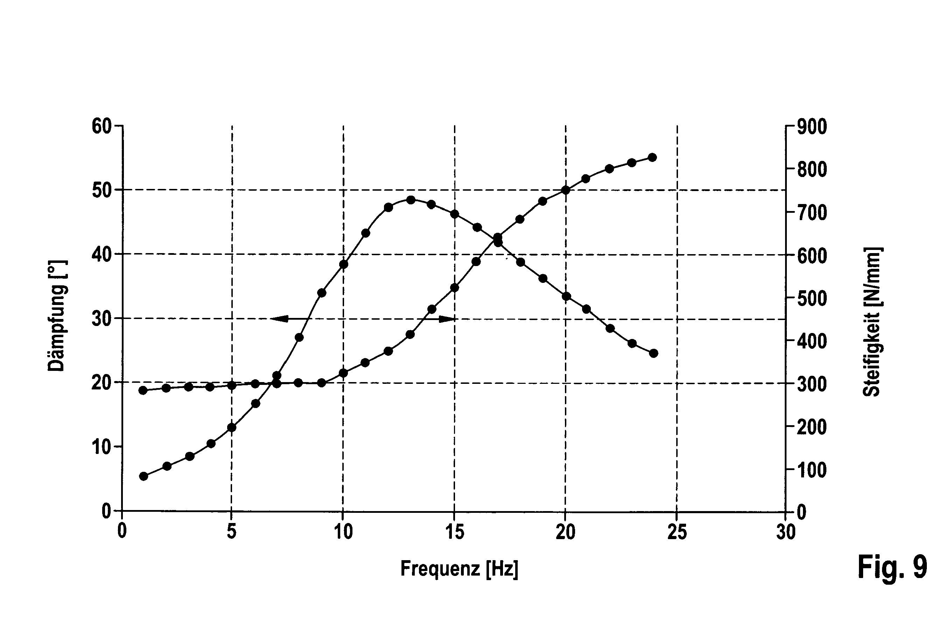

Wie aus Figur 9 erkenntlich, haben die herkömmlichen bekannten hydraulischen Lagerelemente LE1, LE2, LE3 ein bestimmtes Frequenzverhalten hinsichtlich Dämpfung und Steifigkeit. Ein derartiges Verhalten ist jedoch nicht für alle Betriebszustände optimal. Daraus ergibt sich die allgemeine Notwendigkeit, dass das Schwingungsverhalten hinsichtlich Dämpfung und/oder Steifigkeit betriebszustandsabhängig zu gestalten ist, um ein optimales Schwingungsverhalten zu erzielen.

Eine Aufgabe der vorliegenden Erfindung liegt darin, ein verbessertes Verfahren und eine verbesserte Vorrichtung zur betriebssituationsabhängigen Einstellung der Schwingungseigenschaften von Lagerelementen zur Lagerung eines Aggregats, insbesondere einer Brennkraftmaschine und/oder eines Getriebes, in einem Kraftfahrzeug zu schaffen, wobei die Einstellung der Schwingungseigenschaften für beliebige Betriebssituationen optimierbar ist.

Die erfindungsgemäße Vorrichtung zur betriebssituationsabhängigen Einstellung der Schwingungseigenschaften von Lagerelementen zur Lagerung eines Aggregats, insbesondere einer Brennkraftmaschine und/oder eines Getriebes, in einem Kraftfahrzeug nach Anspruch 1 und das entsprechende Verfahren nach Anspruch 12 weisen den Vorteil auf, dass die Einstellung der Schwingungseigenschaften unter Sicherheitsaspekten, Komfortaspekten und sonstigen beliebigen Aspekten optimierbar ist. Auch kann eine Reduzierung von Lastspitzen an Gelenkwellen, Lagern, Karosserieelementen und Trägerelementen erreicht werden, was die Lebensdauer dieser Bauteile erhöht bzw. deren Dimensionierungserfordernisse reduziert.

Die der vorliegenden Erfindung zugrunde liegende Idee besteht darin, für unterschiedliche vorbestimmte Betriebssituationen unterschiedliche Einstellungsprogramme der Schwingungseigenschaften vorzusehen und bei gleichzeitigem Vorliegen von mehreren unterschiedlichen vorbestimmten Betriebssituationen eine zyklische Priorisierung hinsichtlich des zu wählenden Einstellprogramms durchzuführen.

In den Unteransprüchen finden sich vorteilhafte Weiterbildungen und Verbesserungen des jeweiligen Gegenstandes der Erfindung.

Gemäß einer bevorzugten Weiterbildung weist das Lagerelement eine durch Anlegen eines Stromes veränderliche Steifigkeit und/oder Dämpfung auf, wobei die Einstelleinrichtung eine Reglereinrichtung ist, die ausgelegt ist, eine Regelung auf einen Soll-Stromwerts gemäß dem Einstellparametersatz durchzuführen.

Gemäß einer weiteren bevorzugten Weiterbildung umfasst der Einstellparametersatz eine Regeldauer und ein oder mehrere Regelkonstanten.

Gemäß einer weiteren bevorzugten Weiterbildung ist eine Bewegungsrichtungs-Erfassungseinrichtung zum Erfassen der Bewegungsrichtung des Lagerelements vorgesehen ist und der Einstellparametersatz bewegungsrichtungsabhängig.

Ein Ausführungsbeispiel der Erfindung ist in den Zeichnungen dargestellt und in der nachfolgenden Beschreibung näher erläutert.

Es zeigen:

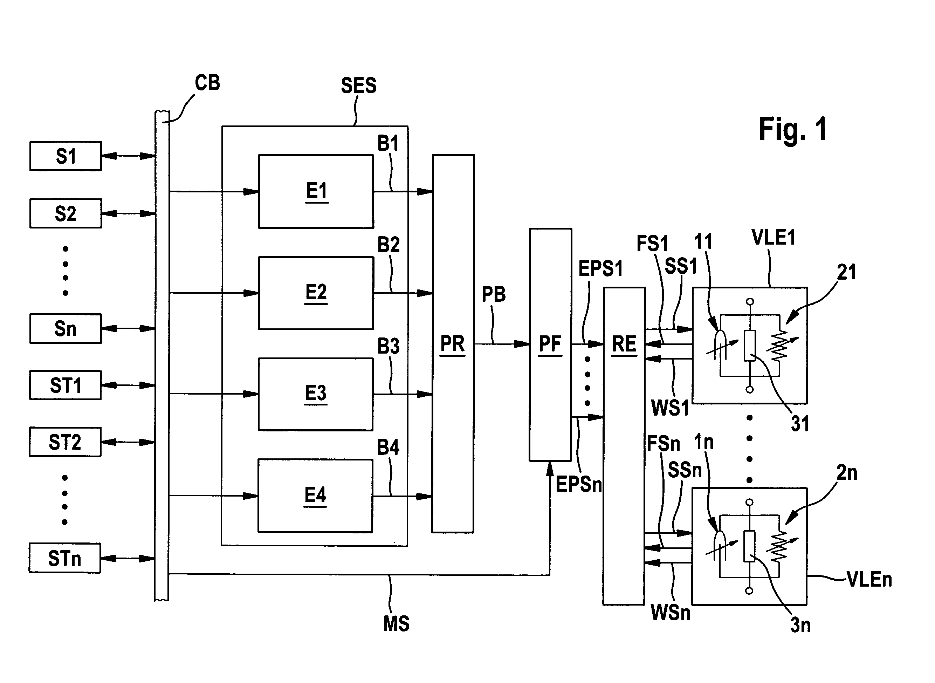

- Fig. 1: ein Blockdiagramm einer Vorrichtung zur betriebssituationsabhängigen Einstellung der Schwingungseigenschaften von Lagerelementen zur Lagerung eines Aggregats, insbesondere einer Brennkraftmaschine und/oder eines Getriebes, in einem Kraftfahrzeug gemäß einer Ausfrührungsform der vorliegenden Erfindung;

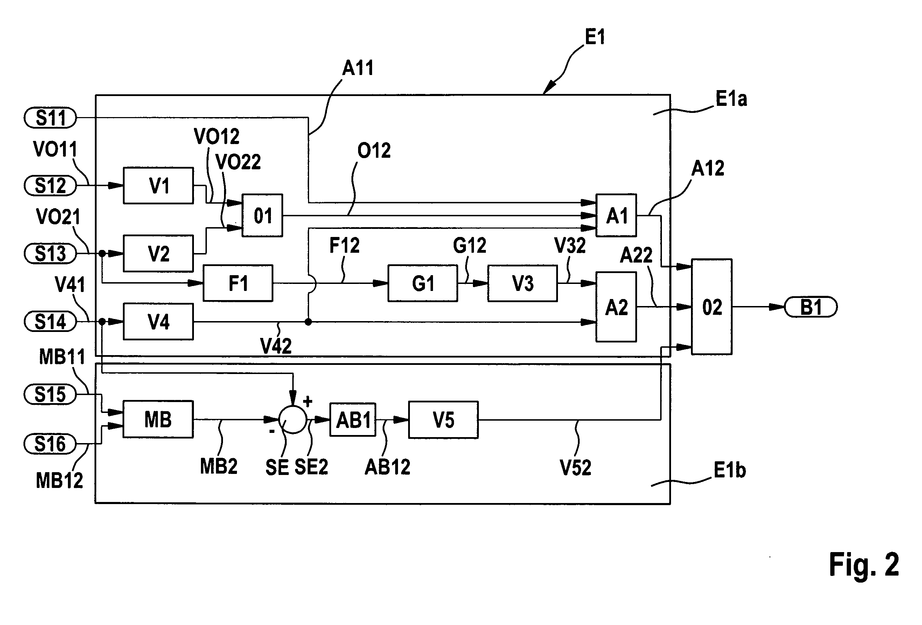

- Fig. 2: ein logisches Blockdiagramm des Traktions-Situations-Erkennungsblocks E1 der Vorrichtung nach Fig. 1;

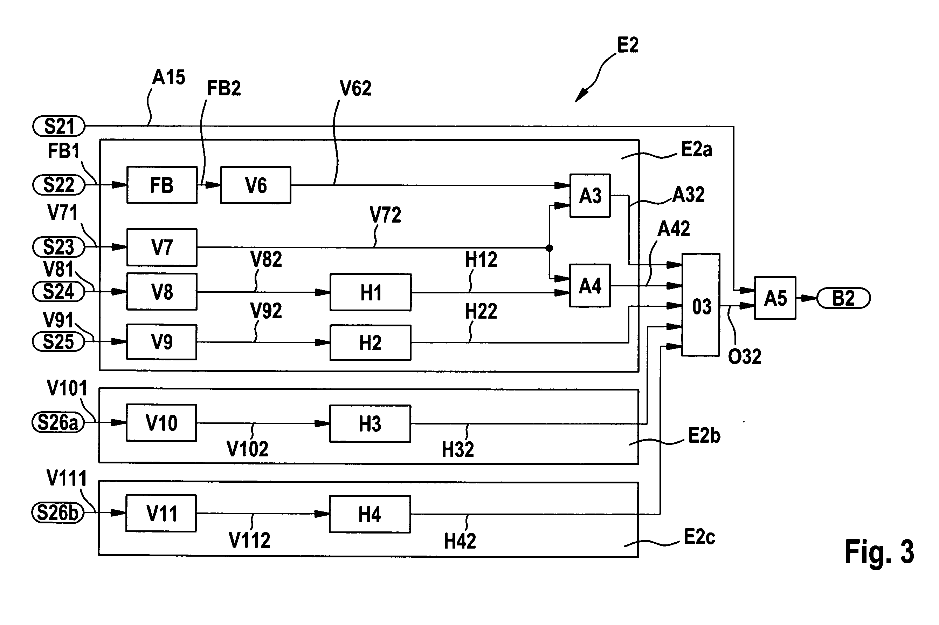

- Fig. 3: ein logisches Blockdiagramm des Handling-Situations-Erkennungsblocks E2 der Vorrichtung nach Fig. 1;

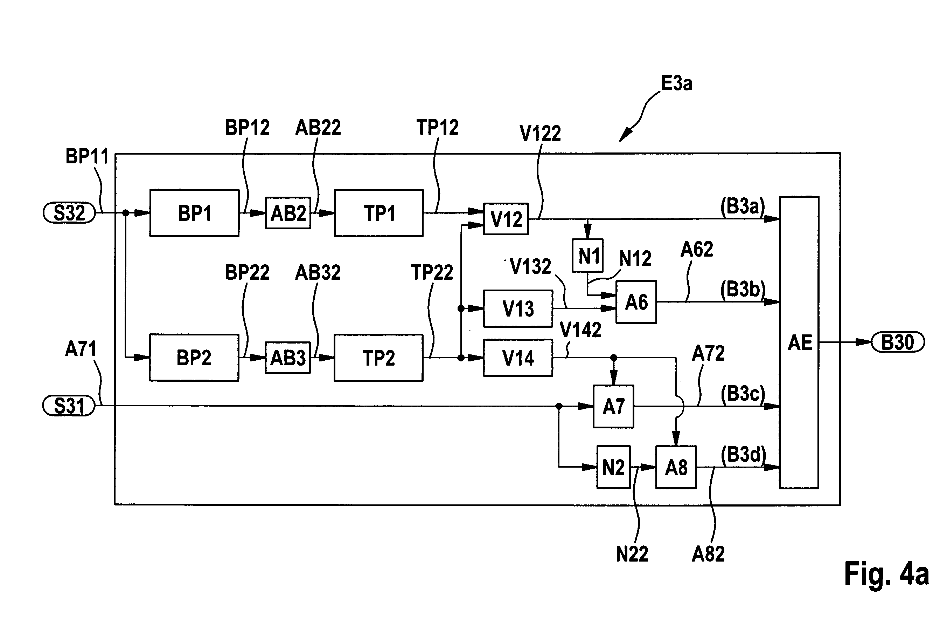

- Fig. 4a-c: zeigen ein jeweiliges logisches Blockdiagramm von drei Komponenten des Fahrkomfort-Situations-Erkennungsblocks E3 der Vorrichtung nach Fig. 1;

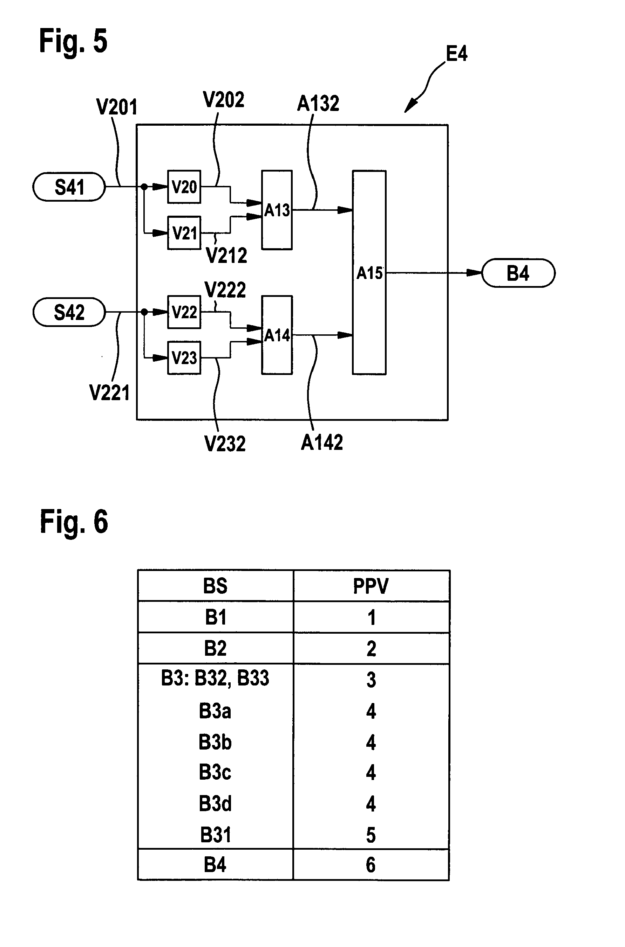

- Fig. 5: ein logisches Blockdiagramm des Geräuscheinleitungs-Situations-Erkennungsblocks E4 der Vorrichtung nach Fig. 1;
- Fig. 6: eine Tabelle der Priorisierungseinrichtung der Vorrichtung nach Fig. 1;

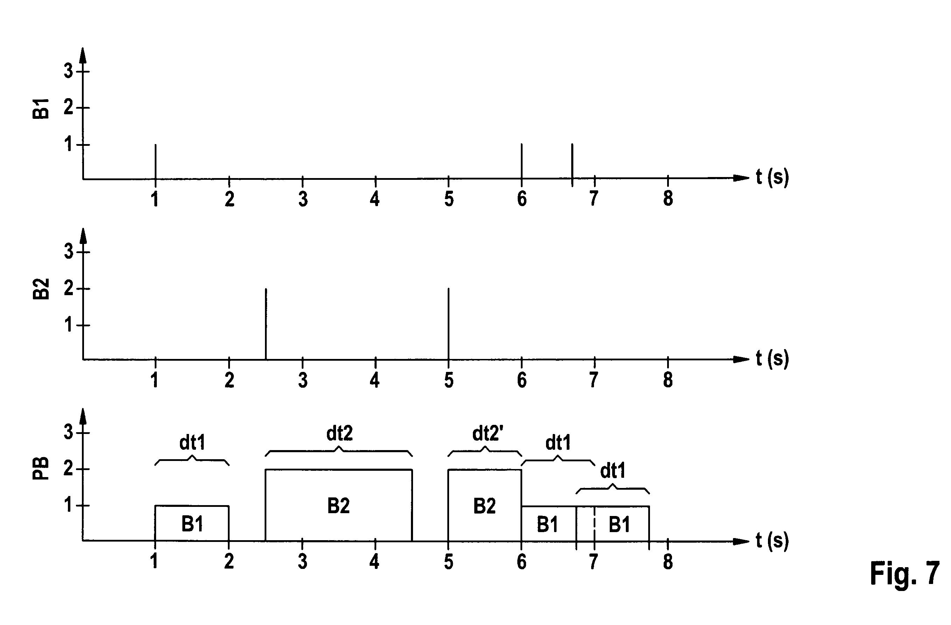

- Fig. 7: ein Zeitablaufdiagramm zur Erläuterung der Funktion der Priorisierungseinrichtung der Vorrichtung nach Fig. 1;
- Fig. 8,8a,8b: eine jeweilige schematische Darstellung einer bekannten Aggregatanordnung in einem Kraftfahrzeug, und zwar Fig. 8 in Draufsicht und Fig. 8a,b in zwei unterschiedlichen senkrechten Schnittansichten gemäß Line A-A bzw. B-B in Fig. 8; und
- Fig. 9: eine schematische Darstellung der Frequenzabhängigkeit der passiven hydraulischen Lagerelemente der bekannten Aggregatanordnung in einem Kraftfahrzeug gemäß Fig. 8.

In den Figuren bezeichnen dieselben Bezugszeichen gleiche oder funktionsgleiche Elemente.

Fig. 1 ist ein Blockdiagramm einer Vorrichtung zur betriebssituationsabhängigen Einstellung der Schwingungseigenschaften von Lagerelementen zur Lagerung eines Aggregats, insbesondere einer Brennkraftmaschine und/oder eines Getriebes, in einem Kraftfahrzeug gemäß einer Ausfrührungsform der vorliegenden Erfindung.

Bei dem vorliegenden Ausführungsbeispiel wird der bereits mit Bezug auf Fig. 8,8a,8b beschriebene Aufbau angenommen, wobei die passiven hydraulischen Lagerelemente LE1, LE2 durch zwei einstellbare hydraulische Lagerelemente VLE1, VLE2 ersetzt worden sind bzw. allgemein VLE1 ... VLEn durch Anlegen eines externen Stroms einstellbare bzw. regelbare hydraulische Lagerelemente mit n=2 vorgesehen sind, wie sie beispielsweise in der EP 1 258 650 A2 beschrieben sind. Diese Lagerelemente VLE1 ... VLEn werden durch eine Vorrichtung zur betriebssituationsabhängigen Einstellung der Schwingungseigenschaften eingestellt bzw. geregelt, die nachstehend näher erläutert wird. In diesem Zusammenhang befinden sich die Lagerelemente VLE1 ... VLEn normalerweise in einem betriebssituationsabhängigen Grundzustand und werden bei Erfassen vorbestimmter Betriebszustände durch eine Regelung, die gemäß einer zyklischen Priorisierung festgelegt wird, bewegungsrichtungsabhängig verstellt.

In Figur 1 bezeichnen Bezugszeichen S1, S2, ..., Sn eine Mehrzahl von Sensoren, welche betriebssituationsspezifische Parameter eines Kraftfahrzeuges angeben, beispielsweise Geschwindigkeitssensor, Bremssensor, Motordrehzahlsensor, Lenkwinkelsensor, Kupplungssensor, Vertikalbeschleunigungssensor, Lateralbeschleunigungssensor, Raddrehzahlsensor, Gaspedalsensor usw..

Weiterhin bezeichnen Bezugszeichen ST1, ST2, ..., STn Steuergeräte, welche sich in einem jeweiligen betriebssituationsspezifischen Betriebszustand befinden, der u.a. von den Signalwerten der Sensoren S1, S2, ..., Sn bestimmt ist.

Sowohl die Sensoren S1, S2, ..., Sn als auch die Steuergeräte ST1, ST2, ..., STn können beim vorliegenden Beispiel bidirektional mit einem Datenbus CB, z. B. einem CAN-Bus, kommunizieren.

Bezugszeichen SES bezeichnet eine Betriebssituations-Erkennungseinrichtung mit einer Mehrzahl von Betriebssituations-Erkennungsblöcken E1, E2, E3, E4 zum Erkennen einer entsprechenden Mehrzahl unterschiedlicher Betriebssituationen des Kraftfahrzeuges anhand der betriebssituationsspezifischer Eingangssignale der Sensoren S1, S2, ..., SN und der Steuergeräte ST1, ST2, ..., STn, welche der Betriebssituations-Erkennungseinrichtung SES vom Datenbus CB zuführbar sind, und zum Liefern eines entsprechenden jeweiligen Betriebssituations-Ausgangssignals B1, B2, B3, B4.

Beim vorliegenden Ausführungsbeispiel umfasst die Betriebssituations-Erkennungseinrichtung SES vier Betriebssituations-Erkennungsblöcke E1, E2, E3, E4, nämlich einen ersten Betriebssituations-Erkennungsblock E1 zum Erkennen mindestens einer Traktions-Betriebssituation, einen zweiten Betriebssituations-Erkennungsblock E2 zum Erkennen mindestens einer Handling-Betriebssituation, einen dritten Betriebssituations-Erkennungsblock E3 zum Erkennen mindestens einer Fahrkomfort-Betriebssituation sowie einen vierten Betriebssituations-Erkennungsblock E4 zum Erkennen mindestens einer Geräuscheinleitungs-Betriebssituation, welche vier unterschiedliche Betriebssituationen erfassen können und ein entsprechendes Betriebssituations-Ausgangssignal B1, B2, B3, B4 liefern.

Eine Priorisierungseinrichtung PR empfängt ständig die jeweiligen Ausgangssignale B1, B2, B3, B4 der Betriebssituations-Erkennungsblöcke E1, E2, E3, E4 und legt eine Lagereinstellungs-relevante Betriebssituation gemäß einer vorbestimmten gespeicherten Prioritätsverteilung fest und gibt ein entsprechendes priorisiertes Betriebssituationssignal PB aus.

Weiterhin bezeichnet Bezugszeichen PF eine Parameter-Festlegungseinrichtung zum Festlegen eines Einstellparametersatzes EPS1 ... EPSn für ein jeweiliges Lagerelement VLE1 ... VLEn basierend auf dem Ausgangssignal PB der Priorisierungseinrichtung PR. Diese Einstellparametersätze EPS1 ... EPSn sind entweder in der Parameter-Festlegungseinrichtung PF gespeichert oder können von dieser gemäß vorbestimmten Algorithmen berechnet werden. Der Parameter-Festlegungseinrichtung PF ist weiterhin ein Modussignal MS zum Festlegen des Einstellparametersatzes EPS1 ... EPSn unter Berücksichtigung des Modussignals MS zuführbar. So lassen sich die Einstellparametersätze EPS1 ... EPSn zusätzlich in Abhängigkeit des momentanen Betriebszustandes variieren, z.B. in Abhängigkeit Geschwindigkeit, vorgewähltem Programm, Anregung etc.

Das Modussignal MS kann vorzugsweise vom Datenbus CB an die Parameter-Festlegungseinrichtung PF gegeben werden. Das Modussignal MS kann von einem oder mehreren der Steuergeräte ST1, ST2 ..., STn erzeugt und an den Datenbus CB gegeben werden. Bei der Erzeugung des Modussignals können Signalwerte der Sensoren S1, S2, ..., Sn und/oder Eingaben des Bedieners des Kraftfahrzeugs berücksichtigt werden.

Das Bezugszeichen RE bezeichnet eine Einstelleinrichtung zum Einstellen der Schwingungseigenschaften der Lagerelemente VLE1 ... VLEn basierend auf dem jeweiligen Einstellparametersatz EPS1 ... EPSn in Form einer Strom-Reglereinrichtung.

Im vorliegenden Beispiel ist die Einstelleinrichtung RE eine PID-Reglereinrichtung, die ausgelegt ist, eine Regelung eines an die Lagerelemente VLE1 ... VLEn anzulegenden Stromes basierend auf dem jeweiligen Einstellparametersatz EPS1 ... EPSn durchzuführen. Dazu beinhaltet der jeweilige Einstellparametersatz EPS1 ... EPSn ein Soll-Stromsignal SS1 ... SSn für ein jeweiliges Lagerelement VLE1 ... VLEn. Die Lagerelemente VLE1 ... VLEn weisen eine durch Anlegen des Stromes veränderliche Steifigkeit 21 ... 2n und Dämpfung 11 ... 1n auf. Die Einstelleinrichtung RE empfängt ein jeweiliges Ist-Stromsignal IS1 ... ISn von den Lagerelementen VLE1 ... VLEn.

Neben den Soll-Stromsignalen SS1 ... SSn umfasst der Einstellparametersatz EPS1 ... EPSn eine jeweilige betriebssituationsspezifische Regeldauer und entsprechende PID-Regelkonstanten.

Weiterhin ist eine jeweilige Bewegungsrichtungs-Erfassungseinrichtung 31 ... 3n zum Erfassen der Bewegungsrichtung des jeweiligen Lagerelements VLE1 ... VLEn vorgesehen, da der Einstellparametersatz EPS1 ... EPSn bewegungsrichtungsabhängig ist. Mit anderen Worten wird generell in Zugrichtung ein niedrigerer Strom eingeregelt als in Druckrichtung, um eine Rückführung des Hydraulikfluids des jeweiligen Lagerelements VLE1 ... VLEn zu ermöglichen. Beispielsweise ist die Bewegungsrichtungs-Erfassungseinrichtung 31 ... 3n ein Weglängensensor oder ein Drucksensor. In diesem Zusammenhang sei erwähnt, dass der jeweilige Einstellparametersatz EPS1, ..., EPSn bewegungsrichtungsabhängig ist, also der Sollstrom in Zugrichtung vom Sollstrom in Druckrichtung verschieden ist.

Die Lagerelemente VLE1 ... VLEn können mit Vorteil jeweils mindestens eine Kammer mit einem magnetoreologischen Fluid aufweisen. Derartige, in den Zeichnungen nicht näher dargestellte Lagerelemente VLE1 ... VLEn werden nachfolgend beispielhaft beschrieben. So können derartige Lagerelemente VLE1 ... VLEn z.B. eine Kammer mit einem magnetorheologischen Fluid, eine Spule, die ein Magnetfeld in der Kammer erzeugt, und einen Drucksensor der einen Druck des Fluids in der Kammer misst, umfassen. Weiterhin können eine Druckerfassungseinheit, eine Berechnungseinheit und eine Schalteinheit vorgesehen sein, wobei die Druckerfassungseinheit zyklisch einen Messwert des durch den Drucksensor gemessenen Drucks erfasst, wobei die Berechnungseinheit unter Verwendung mindestens zweier Messwerte des Drucks eine Änderungsgeschwindigkeit des Drucks berechnet, und wobei die Schalteinheit abhängig davon, ob die Änderungsgeschwindigkeit einen Schwellwert übersteigt, einen Steuerstrom durch die Spule einschaltet bzw. abschaltet.

Einem oder mehreren der Steuergeräte ST1, ST2, ..., STn können Eingangssignale eines oder mehrerer solcher Drucksensoren zuführbar sein, wobei die Drucksensoren zum Messen des Drucks des magnetorheologischen Fluids in der Kammer eines Lagerelements VLE1 ... VLEn ausgebildet sind. Ein oder mehrere Steuergeräte ST1, ST2, ..., STn können Druckerfassungseinheiten aufweisen.

Vorzugsweise können die Lagerelemente VLE1 ... VLEn jeweils innerhalb eines Gehäuses eine Arbeitskammer und eine Ausgleichskammer aufweisen, zwischen denen ein magnetorheologisches Fluid reziprokierbar ist. Dies ist eine Ausbildungsform für Lagerelemente VLE1 ... VLEn mit einer Kammer mit einem magnetoreologischen Fluid, wobei zwischen der genannten Arbeitskammer und der genannten Ausgleichskammer eines Lagerelements VLE1 ... VLEn jeweils eine Trennwand bzw. Platte vorgesehen sein kann, die an ihrer Peripherie, z.B. in drei Richtungen, spaltförmige Öffnungen aufweist, durch die der Transport des Fluids zwischen den Kammern erfolgt.

Entlang der Peripherie der Trennwand, die z.B. als Platte ausgebildet sein kann, verlaufen Windungen einer Spule, in die über einen elektrischen Anschluss ein Steuerstrom eingeleitet werden kann. Fließt ein Steuerstrom, so baut sich an den durch Eisenkanäle begrenzten spaltförmigen Öffnungen ein Magnetfeld auf, das zu einer Erhöhung des Durchflusswiderstands des magnetorheologischen Fluids im Bereich der spaltförmigen Öffnungen führt, wodurch in Abhängigkeit von der Stärke des Stromflusses der Fluss des Fluids behindert oder vollständig unterbunden werden kann.

Mit der Arbeitskammer über einen für das Fluid durchlässigen Kanal verbunden kann eine Drucksensorhalterung angeordnet sein, an der ein Drucksensor angebracht ist, der über eine elektrische Verbindung ein dem Druck in der Arbeitskammer entsprechendes Messsignal liefert. Zweckmäßigerweise kann der Drucksensor so angebracht sein, dass zum einen das Magnetfeld der Spule die Verbindung zwischen Drucksensor und Arbeitskammer nicht beeinflusst und zum anderen das Messsignal in der Nähe des Ortes abgenommen werden kann, wo sich auch der Anschluss der Spule befindet.

Im Folgenden werden die vier Betriebssituations-Erkennungsblöcke E1, E2, E3, E4 näher erläutert.

Fig. 2 ist ein logisches Blockdiagramm des Traktions-Situations-Erkennungsblocks E1 der Vorrichtung nach Fig. 1.

Der Traktions-Betriebssituations-Erkennungsblock E1 weist einen Startsituation-Erkennungsblock E1a und einen Traktionsverlust-Erkennungsblock E1b auf, welche beide ein Traktions-Betriebssituationssignal B1 erzeugen können. Der Startsituation-Erkennungsblock E1a ermittelt ob ein Traktionsverlust unmittelbar bevorstehen könnte, und der Traktionsverlust-Erkennungsblock E1b ermittelt, ob ein Traktionsverlust bereits vorliegt.

In Fig. 2 bezeichnet Bezugszeichen S11 einen Kupplungssensor zum Erfassen der Betätigung des Kupplungssignals, S12 einen Gaspedalsensor zum Erfassen des Betätigungsgrades des Gaspedals, S13 einen Motordrehzahlsensor zum Erfassen der Motordrehzahl, S14 einen Geschwindigkeitssensor zum Erfassen der Kraftfahrzeuggeschwindigkeit, S15 einen Raddrehzahlsensor linkes Hinterrad sowie S16 einen Raddrehzahlsensor rechtes Hinterrad zum Erfassen der jeweiligen Raddrehzahlen.

Weiterhin bezeichnen Bezugszeichen V1 bis V5 eine erste bis fünfte Vergleichseinrichtung, 01 und 02 eine erste bzw. zweite ODER-Verknüpfungseinrichtung, A1 und A2 eine erste bzw. zweite UND-Verknüpfungseinrichtung, F1 eine Filtereinrichtung, G1 eine Gradienten-Berechnungseinrichtung, SE eine Summationseinrichtung, AB1 eine erste Absolutwert-Berechnungseinrichtung und MB eine Mittelwert-Berechnungseinrichtung. Diese Einrichtungen führen basierend auf den Sensorsignalen Berechnungen und logische Verknüpfungen durch, um daraus das Traktions-Betriebssituationssignal B1 zu bilden.

A11 bezeichnet das Ausgangssignal des Kupplungssensors S11 und gleichzeitig das erste Eingangssignal der ersten UND-Verknüpfungseinrichtung A1. V011 bezeichnet das Ausgangssignal des Gaspedalsensors S12 und gleichzeitig das Eingangssignal der ersten Vergleichseinrichtung V1. V021 bezeichnet das Ausgangssignal des Motordrehzahlsensors S13 und gleichzeitig das Eingangssignal der zweiten Vergleichseinrichtung V2. V41 bezeichnet das Ausgangssignal des Geschwindigkeitssensors S14 und gleichzeitig das Eingangssignal der vierten Vergleichseinrichtung V4. MB11 bezeichnet das Ausgangssignal des Raddrehzahlsensors S15 für das linke Hinterrad und gleichzeitig das erste Eingangssignal der Mittelwertbildungseinrichtung MB. MB12 bezeichnet das Ausgangssignal des Raddrehzahlsensors S16 für das rechte Hinterrad und gleichzeitig das zweite Eingangssignal für die Mittelwertbildungseinrichtung MB. V012 bezeichnet das Ausgangssignal der ersten Vergleichseinrichtung V1 und gleichzeitig das erste Eingangssignal der ersten ODER-Verknüpfungseinrichtung 01. V022 bezeichnet das Ausgangssignal der zweiten Vergleichseinrichtung V2 und gleichzeitig das zweite Eingangssignal der ersten ODER-Verknüpfungseinrichtung 01. 012 bezeichnet das Ausgangssignal der ersten ODER-Verknüpfungseinrichtung 01 und gleichzeitig das zweite Eingangssignal der ersten UND-Verknüpfungseinrichtung A1. F12 bezeichnet das Ausgangssignal der ersten Filtereinrichtung F1 und gleichzeitig das Eingangssignal der Gradienten-Berechnungseinrichtung G1. G12 bezeichnet das Ausgangssignal der Gradientenbildungseinrichtung G1 und gleichzeitig das Eingangssignal der dritten Vergleichseinrichtung V3. V32 bezeichnet das Ausgangssignal der dritten Vergleichseinrichtung V3 und gleichzeitig das erste Eingangssignal der zweiten UND-Verknüpfungseinrichtung A2. V42 bezeichnet das Ausgangssignal der vierten Vergleichseinrichtung und gleichzeitig das dritte Eingangssignal der ersten UND-Verknüpfungseinrichtung A1 und das zweite Eingangssignal der zweiten UND-Verknüpfungseinrichtung A2. A12 bezeichnet das Ausgangssignal der ersten UND-Verknüpfungseinrichtung A1 und gleichzeitig das erste Eingangssignal der zweiten ODER-Verknüpfungseinrichtung 02. A22 bezeichnet das Ausgangssignal der zweiten UND-Verknüpfungseinrichtung A2 und gleichzeitig das zweite Eingangssignal der zweiten ODER-Verknüpfungseinrichtung 02. MB2 bezeichnet das Ausgangssignal der Mittelwertbildungseinrichtung MB und gleichzeitig das erste Eingangssignal der Summationseinrichtung SE. V41 bezeichnet das zweite Eingangssignal der Summationseinrichtung SE. SE2 bezeichnet das Ausgangssignal der Summationseinrichtung SE und gleichzeitig das Eingangssignal der ersten Absolutwertbildungseinrichtung AB1. AB12 bezeichnet das Ausgangssignal der ersten Absolutwertbildungseinrichtung AB1 und gleichzeitig das Eingangssignal der fünften Vergleichseinrichtung V5. V52 bezeichnet das Ausgangssignal der fünften Vergleichseinrichtung und gleichzeitig das dritte Eingangssignal der zweiten ODER-Verknüpfungseinrichtung 02.

Die Erkennung eines Traktions-Betriebszustandes und die Ausgabe des Traktions-Betriebssituationssignal B1 als logisch "1" liegt vor, wenn eines der Eingangssignale A12, A22 der zweiten ODER-Verknüpfungseinrichtung 02 vom Startsituation-Erkennungsblock E1a oder das Eingangssignal V52 vom Traktionsverlust-Erkennungsblock E1b auf logisch "1" liegt.

Hinsichtlich des Startsituation-Erkennungsblockes E1a ist die Erkennung eines Traktions-Betriebszustandes erstens der Fall, wenn alle drei Eingangssignale A11, 012, V42 der ersten UND-Verknüpfungseinrichtung A1 auf logisch "1" liegen.

Der ersten UND-Verknüpfungseinrichtung A1 werden als Eingangssignale das Ausgangssignal A11 des Kupplungssensors S11, das Ausgangssignal 012 der ersten ODER-Verknüpfungseinrichtung 01 sowie das Ausgangssignal V42 der vierten Vergleichseinrichtung V4 zugeführt. Ist das Kupplungspedal gedrückt, so ist das Ausgangssignal A11 des Kupplungssensors S11 logisch "1"

Der ersten ODER-Verknüpfungseinrichtung 01 werden das Ausgangssignal V012 der ersten Vergleichseinrichtung V1 und das Ausgangssignal V022 der zweiten Vergleichseinrichtung V2 zugeführt. Die erste Vergleichseinrichtung V1 prüft, ob das Ausgangssignal V011 des Gaspedalsensors S12 größer als ein vorbestimmter Wert ist. Die zweite Vergleichseinrichtung V2 prüft, ob das Ausgangssignal V021 des Motordrehzahlsensors S13 größer als ein vorbestimmter Wert ist.

Ist eine dieser beiden Bedingungen erfüllt, so gibt die ODER-Verknüpfungseinrichtung 02 als Ausgangssignal 012 logisch "1" aus.

Das Ausgangssignal V41 des Geschwindigkeitssensors S14 wird der vierten Vergleichseinrichtung V4 zugeführt, welche prüft, ob die Geschwindigkeit kleiner als ein vorbestimmter Wert ist. Ist dies der Fall, so liefert die vierte Vergleichseinrichtung V4 als Ausgangssignal V42 logisch "1" an die erste UND-Verknüpfungseinrichtung A1 und an die zweite UND-Verknüpfungseinrichtung A2.

Hinsichtlich des Startsituation-Erkennungsblockes E1a ist die Erkennung eines Traktions-Betriebszustandes zweitens der Fall, wenn beide Eingangssignale V32, V42 der zweiten UND-Verknüpfungseinrichtung A2 auf logisch "1" liegen.

Die zugrundeliegende Bedingung für das Ausgangssignal V42 der vierten Vergleichseinrichtung V4 wurde bereits oben erläutert. Die zugrundeliegende Bedingung für das Ausgangssignal V32 der dritten Vergleichseinrichtung V3 wird nachstehend erläutert.

Das Ausgangssignal V021 des Motordrehzahlsensors S13 wird weiterhin der Filtereinrichtung F1 zugeführt, wo es mit einer spezifischen Filtercharakteristik gefiltert wird. Das Ausgangssignal G12 der Filtereinrichtung F1 wird der Gradienten-Berechnungseinrichtung G1 zugeführt. Das Ausgangssignal G12 der Gradienten-Berechnungseinrichtung G1 wird weitergeleitet an die dritte Vergleichseinrichtung V3, die überprüft, ob der berechnete Gradient kleiner Null ist, d.h. die Motordrehzahl abfällt, was ein Einkuppeln wiederspiegelt. Ist dies der Fall, liefert die dritte Vergleichseinrichtung V3 als Ausgangssignal V32 logisch "1" an die zweite UND-Verknüpfungseinrichtung A2.

Hinsichtlich des Traktionsverlust-Erkennungsblockes E1b ist die Erkennung eines Traktions-Betriebszustandes der Fall, wenn das Ausgangssignal V52 der fünften Vergleichseinrichtung auf logisch "1" liegt.

Mittels des Raddrehzahlsensors wird S15 die Raddrehzahl des linken Hinterrades, und mittels des Raddrehzahlsensors S16 wird die Raddrehzahl des rechten Hinterrades ermittelt.

Die beiden Ausgangssignale MB11, MB12 werden der Mittelwertbildungseinrichtung MB als Eingangssignale zugeführt. Die Mittelbildungseinrichtung MB führt das durch sie gebildete Mittelwertsignal als Ausgangssignal MB2 der Summationseinrichtung SE mit negativen Vorzeichen zu. Die Summationseinrichtung SE empfängt ebenfalls das Ausgangssignal V41 des Geschwindigkeitssensors S14. Die Differenz der Signale V41 und MB2 wird der Absolutwert-Berechnungseinrichtung AB1 als Eingangssignal SE2 zugeführt. Das Ausgangssignal AB12 der Absolutwert-Berechnungseinrichtung AB1 wird der fünften Vergleichseinrichtung V5 zugeführt, welche prüft, ob das Absolutwertsignal AB12 größer als ein vorbestimmter Wert ist. Ist dies der Fall, liefert die fünfte Vergleichseinrichtung V5 als Ausgangssignal V52 logisch "1" an die zweite ODER-Verknüpfungseinrichtung 02.

Wird das Traktions-Betriebssituationssignal B1 als priorisiertes Betriebssituationssignal PB an die Parameter-Festlegungseinrichtung PF geliefert, so sieht ein entsprechender Einstellparametersatz EPS1 ... EPSn vor, dass der Soll-Stromwert SS1 ... SSn auf den Maximalwert von 5 A bei einer Druckbewegungsrichtung der Lagerelemente VLE1 ... VLEn geregelt wird, wohingegen er auf einen Minimalwert von 0 A bei einer Zugbewegungseinrichtung der Lagerelemente VLE1 ... VLn geregelt wird. Eine entsprechende Regelzeitdauer beträgt typischerweise 1 bis 5 s.

Durch eine derartige Einstellung der Schwingungseigenschaften der Lagerelemente VLE1 ... VLEn ist es beim vorliegenden Beispiel im Fall der Traktions-Betriebssituation möglich, in z-Richtung (Höhenrichtung des KFZ) verlaufende Radlastschwankungen der Hinterachse des Kraftfahrzeuges zu reduzieren und Aggregatbewegungen und -dynamik in Vertikalrichtung zu minimieren.

Fig. 3 ist ein logisches Blockdiagramm des Handling-Situations-Erkennungsblocks E2 der Vorrichtung nach Fig. 1.

Der Handling-Situations-Erkennungsblock E2 weist einen Lateraldynamik-Erkennungsblock E2a, einen Longitudinaldynamik-Erkennungsblock E2b und einen Vertikaldynamik-Erkennungsblock E2cauf, die alle das Handling-Betriebssituationssignal B2 erzeugen können.

In Figur 3 bezeichnet Bezugszeichen S21 einen Sportschaltersensor zum Anzeigen eines vom Fahrer gewählten Sportmodus, S22 einen Lenkradwinkelgeschwindigkeitssensor zum Erfassen der Lenkradwinkelgeschwindigkeit, S23 einen Geschwindigkeitssensor zum Erfassen der Fahrzeuggeschwindigkeit, S24 einen Lenkradwinkelsensor zum Erfassen des Lenkradwinkels, S25 einen Lateralbeschleunigungssensor zum Erfassen der Lateralbeschleunigung des Fahrzeugs, S26a einen Longitudinalbeschleunigungssensor zum Erfassen der Longitudinalbeschleunigung des Fahrzeugs und S26b einen Vertikalbeschleunigungssensor zum Erfassen der Vertikalbeschleunigung des Fahrzeugs.

Weiterhin bezeichnen Bezugszeichen V6 bis V11 eine sechste bis elfte Vergleichseinrichtung, 03 eine dritte ODER-Verknüpfungseinrichtung, A3 bis A5 eine dritte bis fünfte UND-Verknüpfungseinrichtung, FB eine Frequenzberechnungseinrichtung und H1 bis H4 eine erste bis vierte Signalhalteeinrichtung. Diese Einrichtungen führen basierend auf den Sensorsignalen Berechnungen und logische Verknüpfungen durch, um daraus das Handling-Betriebssituationssignal B2 zu bilden.

A15 bezeichnet das Ausgangssignal des Sportschaltersensors S21 und gleichzeitig das erste Eingangssignal der fünften UND-Verknüpfungseinrichtung A5. FB1 bezeichnet das Ausgangssignal des Lenkradwinkelgeschwindigkeitssensors S22 und gleichzeitig das Eingangssignal der Frequenzberechnungseinrichtung FB. V71 bezeichnet das Ausgangssignal des Geschwindigkeitssensors und gleichzeitig das Eingangssignal der siebten Vergleichseinrichtung V7. V81 bezeichnet das Ausgangssignal des Lenkradwinkelsensors S24 und gleichzeitig das Eingangssignal der achten Vergleichseinrichtung V8. V91 bezeichnet das Ausgangssignal des Lateralbeschleunigungssensors S25 und gleichzeitig das Eingangssignal der neunten Vergleichseinrichtung V9. V101 bezeichnet das Ausgangssignal des Longitudinalbeschleunigungssensors S26a und gleichzeitig das Eingangssignal der zehnten Vergleichseinrichtung V10. V111 bezeichnet das Ausgangssignal des Vertikalbeschleunigungssensors S26b und gleichzeitig das Eingangssignal der elften Vergleichseinrichtung V11. FB2 bezeichnet das Ausgangssignal der Frequenzberechnungseinrichtung FB und gleichzeitig das Eingangssignal der sechsten Vergleichseinrichtung V6. V62 bezeichnet das Ausgangssignal der sechsten Vergleichseinrichtung V6 und gleichzeitig das erste Eingangssignal der dritten UND-Verknüpfungseinrichtung A3. A32 bezeichnet das Ausgangssignal der dritten UND-Verknüpfungseinrichtung A3 und gleichzeitig das erste Eingangssignal der dritten ODER-Verknüpfungseinrichtung 03. V72 bezeichnet das Ausgangssignal der siebten Vergleichseinrichtung und gleichzeitig das zweite Eingangssignal der dritten UND-Verknüpfungseinrichtung A3 und das erste Eingangssignal der vierten UND-Verknüpfungseinrichtung A4. V82 bezeichnet das Ausgangssignal der achten Vergleichseinrichtung V8 und gleichzeitig das Eingangssignal der ersten Signalhalteeinrichtung H1. H12 bezeichnet das Ausgangssignal der ersten Signalhalteeinrichtung H1 und gleichzeitig das zweite Eingangssignal der vierten UND-Verknüpfungseinrichtung A4. A42 bezeichnet das Ausgangssignal der vierten UND-Verknüpfungseinrichtung A4 und gleichzeitig das zweite Eingangssignal der dritten ODER-Verknüpfungseinrichtung 03. V92 bezeichnet das Ausgangssignal der neunten Vergleichseinrichtung V9 und gleichzeitig das Eingangssignal der zweiten Signalhalteeinrichtung H2. H22 bezeichnet das Ausgangssignal der zweiten Signalhalteeinrichtung H2 und gleichzeitig das dritte Eingangssignal der dritten ODER-Verknüpfungseinrichtung 03. V102 bezeichnet das Ausgangssignal der zehnten Vergleichseinrichtung V10 und gleichzeitig das Eingangssignal der dritten Signalhalteeinrichtung H3. H32 bezeichnet das Ausgangssignal der dritten Signalhalteeinrichtung H3 und gleichzeitig das vierte Eingangssignal der dritten ODER-Verknüpfungseinrichtung 03. V112 bezeichnet das Ausgangssignal der elften Vergleichseinrichtung V11 und gleichzeitig das Eingangsignal der vierten Signalhalteeinrichtung H4. H42 bezeichnet das Ausgangssignal der der vierten Signalhalteeinrichtung H4 und gleichzeitig das fünfte Eingangssignal der dritten ODER-Verknüpfungseinrichtung 03. 032 bezeichnet das Ausgangssignal der dritten ODER-Verknüpfungseinrichtung 03 und gleichzeitig das zweite Eingangssignal der fünften UND-Verknüpfungseinrichtung A5.

Die Erkennung eines Handling-Betriebszustandes und die Ausgabe des Handling-Betriebssituationssignal B2 als logisch "1" liegt vor, wenn beide Eingangssignale A15, 032 der fünften UND-Verknüpfungseinrichtung A5 auf logisch "1" liegen. Da das Eingangssignal A15 das Ausgangssignal des Sportschaltersensors S21 ist, muss also jedenfalls der Sportmodus gewählt sein.

Weiterhin muss eines der Eingangssignale A32, A42, H22 der dritten ODER-Verknüpfungseinrichtung 03 vom Lateraldynamik-Erkennungsblock E2a oder das Eingangssignal H32 vom Longitudinaldynamik-Erkennungsblock E2b oder das Eingangssignal H42 Vertikaldynamik-Erkennungsblock E2c auf logisch "1" liegen.

Hinsichtlich des Lateraldynamik-Erkennungsblocks E2a ist die Erkennung eines Handling-Betriebszustandes erstens der Fall, wenn die beiden Eingangssignale V62, V72 der dritten UND-Verknüpfungseinrichtung A3 auf logisch "1" liegen.

Der ersten UND-Verknüpfungseinrichtung A1 werden als Eingangssignale das Ausgangssignal V62 der sechsten Vergleichseinrichtung V6 und das Ausgangssignal V72 der siebenten Vergleichseinrichtung V7 zugeführt.

Das Ausgangssignal V62 ist logisch "1", wenn die sechste Vergleichseinrichtung V6 entscheidet, dass das Ausgangssignal FB2 der Frequenzberechnungseinrichtung FB größer als ein vorbestimmter Wert ist. Die Frequenzberechnungseinrichtung FB berechnet dazu aus dem Ausgangssignal FB1 des Lenkradgeschwindigkeitssensors S22 eine entsprechende Frequenz. Das Ausgangssignal V72 ist logisch "1", wenn die siebente Vergleichseinrichtung V7 entscheidet, dass das Ausgangssignal V71 des Geschwindigkeitssensors S23 größer als ein vorbestimmter Wert ist, beispielsweise 50 km/h.

Hinsichtlich des Lateraldynamik-Erkennungsblocks E2a ist die Erkennung eines Handling-Betriebszustandes zweitens der Fall, wenn die beiden Eingangssignale V72, H12 der vierten UND-Verknüpfungseinrichtung A4 auf logisch "1" liegen.

Die zugrundeliegende Bedingung für das Ausgangssignal V72 der siebenten Vergleichseinrichtung V7 wurde bereits oben erläutert. Die zugrundeliegende Bedingung für das Ausgangssignal H 12 der ersten Signalhalteeinrichtung H1 wird nachstehend erläutert.

Das Ausgangssignal H12 der ersten Signalhalteeinrichtung H1 ist eine vorbestimmte Zeitspanne, z.B. 5s, logisch "1", nachdem die achte Vergleichseinrichtung V8 entschieden hat, dass das Ausgangssignal V81 des Lenkradwinkelsensors S24 größer als ein vorbestimmter Wert, z.B. 45°, ist, und ein entsprechendes Ausgangssignal V82 von logisch "1" an die erste Signalhalteeinrichtung H1 angelegt hat.

Hinsichtlich des Lateraldynamik-Erkennungsblocks E2a ist die Erkennung eines Handling-Betriebszustandes drittens der Fall, wenn das Ausgangssignal H22 der zweiten Signalhalteeinrichtung H2 auf logisch "1" liegt.

Das Ausgangssignal H22 der zweiten Signalhalteeinrichtung H2 ist eine vorbestimmte Zeitspanne, z.B. 5s, logisch "1", nachdem die neunte Vergleichseinrichtung V9 entschieden hat, dass das Ausgangssignal V91 des Lateralbeschleunigungssensors S25 größer als ein vorbestimmter Wert ist, und ein entsprechendes Ausgangssignal V92 von logisch "1" an die zweite Signalhalteeinrichtung H2 angelegt hat.

Hinsichtlich des Longitudinaldynamik-Erkennungsblocks E2b ist die Erkennung eines Handling-Betriebszustandes der Fall, wenn das Ausgangssignal H32 der zweiten Signalhalteeinrichtung H3 auf logisch "1" liegt.

Das Ausgangssignal H32 der dritten Signalhalteeinrichtung H3 ist eine vorbestimmte Zeitspanne, z.B. 5s, logisch "1", nachdem die zehnte Vergleichseinrichtung V10 entschieden hat, dass das Ausgangssignal V101 des Longitudinalbeschleunigungssensors S26a größer als ein vorbestimmter Wert ist, und ein entsprechendes Ausgangssignal V102 von logisch "1" an die dritte Signalhalteeinrichtung H3 angelegt hat.

Hinsichtlich des Vertikaldynamik-Erkennungsblocks E2c ist die Erkennung eines Handling-Betriebszustandes der Fall, wenn das Ausgangssignal H42 der vierten Signalhalteeinrichtung H4 auf logisch "1" liegt.

Das Ausgangssignal H42 der vierten Signalhalteeinrichtung H4 ist eine vorbestimmte Zeitspanne, z.B. 5s, logisch "1", nachdem die elfte Vergleichseinrichtung V11 entschieden hat, dass das Ausgangssignal V111 des Vertikalbeschleunigungssensors S26b größer als ein vorbestimmter Wert ist, und ein entsprechendes Ausgangssignal V112 von logisch "1" an die vierte Signalhalteeinrichtung H4 angelegt hat.

Wird das Handling-Betriebssituationssignal B2 als priorisiertes Betriebssituationssignal PB an die Parameter-Festlegungseinrichtung PF geliefert, so sieht ein entsprechender Einstellparametersatz EPS1 ... EPSn vor, dass der Soll-Stromwert SS1 ... SSn geregelt wird.

Durch eine derartige Einstellung der Schwingungseigenschaften der Lagerelemente VLE1 ... VLEn ist es beim vorliegenden Beispiel im Fall der Handling-Betriebssituation möglich, neben einer Reduzierung der Hinterachs-Radlastschwankungen/-überhöhungen durch Minimierung der Aggregateigendynamik ebenfalls eine Minimierung des Phasenversatzes zwischen Aufbau- und Aggregatsbewegung bei überlagerter Quer-, Längs- und Vertikaldynamik zu erreichen und somit ein präziseres und vorhersehbareres Fahrverhalten zu bewirken.

Fig. 4a-c zeigen ein jeweiliges logisches Blockdiagramm von drei Komponenten des Fahrkomfort-Situations-Erkennungsblocks E3 der Vorrichtung nach Fig. 1.

Der Schwingungskomfort-Erkennungsblock E3 weist einen Schwingungskomfort-Erkennungsblock E3a, einen Leerlauf-Erkennungsblock E3b und einen Tip-In/Tip-Out-Erkennungsblock E3c auf, die das Fahrkomfort-Betriebssituationssignal B3 in Form eines Signalvektors erzeugen, der eine erste Komponente B30 mit dem Schwingungskomfort-Betriebssituationssignal B3a-d, eine zweite Komponente B31 als Leerlauf-Betriebssituationssignal und eine dritte Komponente als Tip-In/Tip-Out-Betriebssituationssignal B32, B33 aufweist.

In Fig. 4a bezeichnet Bezugszeichen S32 einen Vertikalbeschleunigungssensor zum Erfassen der Vertikalbeschleunigung und Bezugszeichen S31 einen Sportschaltersensor zum Anzeigen eines vom Fahrer gewählten Sportmodus.

Weiterhin bezeichnen Bezugszeichen V12 bis V14 eine zwölfte bis vierzehnte Vergleichseinrichtung, A7 und A8 eine siebente bzw. achte UND-Verknüpfungseinrichtung, BP1 und BP2 eine erste bzw. zweite Bandpassfiltereinrichtung, AB2 und AB3 eine zweite bzw. dritte Absolutwert-Berechnungseinrichtung, TP1 und TP2 eine erste bzw. zweite Tiefpassfiltereinrichtung, N1 und N2 eine erste bzw. zweite Signalinvertierungseinrichtung und AE eine Auswerteeinheit.

BP11 bezeichnet das Ausgangssignal des Vertikalbeschleunigungssensors S32 und gleichzeitig das Eingangssignal der ersten und zweiten Bandpassfiltereinrichtung BP1 bzw. BP2. A71 bezeichnet das Ausgangssignal des Sportschaltersensors S31 und gleichzeitig das Eingangssignal der siebten UND-Verknüpfungseinrichtung A7 und der zweiten Signalinvertiereinrichtung N2. BP12 bezeichnet das Ausgangssignal der ersten Bandpassfiltereinrichtung BP1 und gleichzeitig das Eingangssignal der zweiten Absolutwert-Berechnungseinrichtung AB2. AB22 bezeichnet das Ausgangssignal der zweiten Absolutwert-Berechnungseinrichtung AB2 und gleichzeitig das Eingangssignal der ersten Tiefpassfiltereinrichtung TP1. TP12 bezeichnet das Ausgangssignal der ersten Tiefpassfiltereinrichtung TP1 und gleichzeitig das erste Eingangssignal der zwölften Vergleichseinrichtung V12. BP22 bezeichnet das Ausgangssignal der zweiten Bandpassfiltereinrichtung BP2 und gleichzeitig das Eingangssignal der dritten Absolutwert-Berechnungseinrichtung AB3. AB32 bezeichnet das Ausgangssignal der dritten Absolutwert-Berechnungseinrichtung und gleichzeitig das Eingangssignal der zweiten Tiefpassfiltereinrichtung TP2. TP22 bezeichnet das Ausgangssignal der zweiten Tiefpassfiltereinrichtung und gleichzeitig das zweite Eingangssignal der zwölften Vergleichseinrichtung V12, das Eingangssignal der dreizehnten Vergleichseinrichtung V13 und das Eingangssignal der vierzehnten Vergleichseinrichtung V14. V122 bezeichnet das Ausgangssignal der zwölften Vergleichseinrichtung V12 und gleichzeitig das Eingangssignal der ersten Signalinvertiereinrichtung N1. N12 bezeichnet das Ausgangssignal der ersten Signalinvertierungseinrichtung N1 und gleichzeitig das erste Eingangssignal der sechsten UND-Verknüpfungseinrichtung A6. V132 bezeichnet das Ausgangssignal der dreizehnten Vergleichseinrichtung V13 und gleichzeitig das zweite Eingangssignal der sechsten UND-Verknüpfungseinrichtung A6. V142 bezeichnet das Ausgangssignal der vierzehnten Vergleichseinrichtung V14 und gleichzeitig das zweite Eingangssignal der siebten UND-Verknüpfungseinrichtung A7 und das zweite Eingangssignal der achten UND-Verknüpfungseinrichtung A8. N22 bezeichnet das Ausgangssignal der zweiten Signalinvertierungseinrichtung N2 und gleichzeitig das erste Eingangssignal der achten UND-Verknüpfungseinrichtung A8. A62 bezeichnet das Ausgangssignal der sechsten UND-Verknüpfungseinrichtung A6 und gleichzeitig das zweite Eingangssignal der Auswerteeinrichtung AE. A72 bezeichnet das Ausgangssignal der siebten UND-Verknüpfungseinrichtung A7 und gleichzeitig das dritte Eingangssignal der Auswerteeinrichtung AE. A82 bezeichnet das Ausgangssignal der achten UND-Verknüpfungseinrichtung und gleichzeitig das vierte Eingangssignal der Auswerteeinrichtung AE.

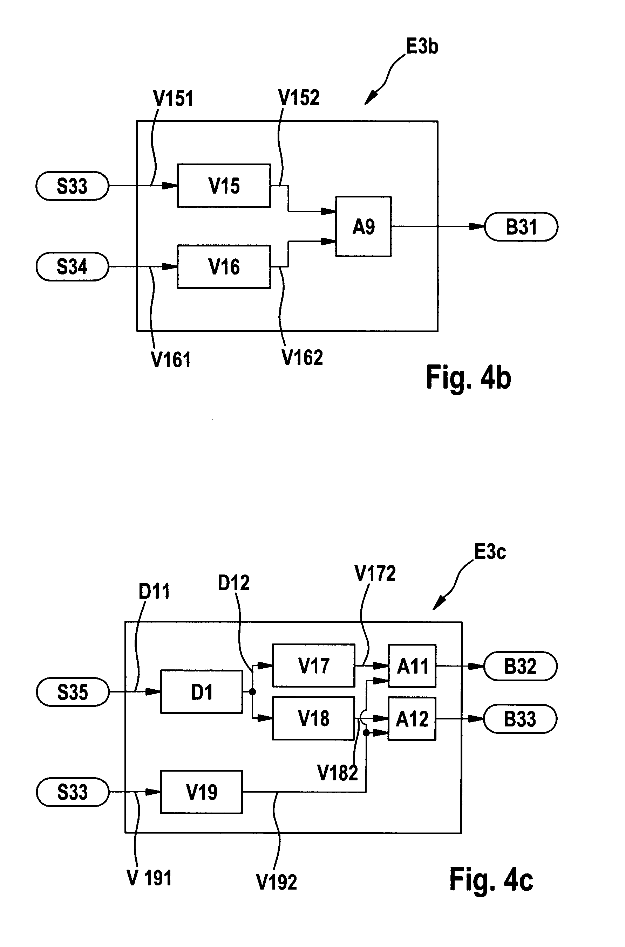

In Fig. 4b bezeichnet Bezugszeichen S33 einen Geschwindigkeitssensor zum Erfassen der Geschwindigkeit des Fahrzeuges und S34 einen Motordrehzahlsensor zum Erfassen der Motordrehzahl.

Weiterhin bezeichnen Bezugszeichen V15 und V16 eine fünfzehnte bzw. sechzehnte Vergleichseinrichtung sowie A9 eine neunte UND-Verknüpfungseinrichtung.

V151 bezeichnet das Ausgangssignal des Geschwindigkeitssensors S33 und gleichzeitig das Eingangssignal der fünfzehnten Vergleichseinrichtung V15. V152 bezeichnet das Ausgangssignal der fünfzehnten Vergleichseinrichtung V15 und gleichzeitig das erste Eingangssignal der neunten UND-Verknüpfungseinrichtung A9. V161 bezeichnet das Ausgangssignal des Motordrehzahlsensors S34 und gleichzeitig das Eingangssignal der sechzehnten Vergleichseinrichtung V16. V162 bezeichnet das Ausgangssignal der sechzehnten Vergleichseinrichtung V16 und gleichzeitig das zweite Eingangssignal der UND-Verknüpfungseinrichtung A9.

In Fig. 4c bezeichnet Bezugszeichen S33 einen Geschwindigkeitssensor zum Erfassen der Geschwindigkeit des Fahrzeuges und S35 einen Gaspedalsensor zum Erfassen des Betätigungsgrades des Gaspedals.

Weiterhin bezeichnen Bezugszeichen V17 bis V19 eine siebzehnte bis neunzehnte Vergleichseinrichtung, A11 und A12 eine elfte bzw. zwölfte UND-Verknüpfungseinrichtung und D1 eine Differenziereinrichtung.

D11 bezeichnet das Ausgangssignal des Gaspedalsensors S35 und gleichzeitig das Eingangssignal der Differenziereinrichtung D1. V191 bezeichnet das Ausgangssignal des Geschwindigkeitssensors S33 und gleichzeitig das Eingangssignal der neunzehnten Vergleichseinrichtung V19. D12 bezeichnet das Ausgangssignal der Differenziereinrichtung D1 und gleichzeitig das Eingangssignal der siebzehnten Vergleichseinrichtung V17 und der achtzehnten Vergleichseinrichtung V18. V171 bezeichnet das Ausgangssignal der siebzehnten Vergleichseinrichtung V17 und gleichzeitig das erste Eingangssignal der elften UND-Verknüpfungseinrichtung A11. V182 bezeichnet das Ausgangssignal der achtzehnten Vergleichseinrichtung V18 und gleichzeitig das erste Eingangssignal der zwölften UND-Verknüpfungseinrichtung A12. V192 bezeichnet das Ausgangssignal der neunzehnten Vergleichseinrichtung V19 und gleichzeitig das zweite Eingangssignal der elften UND-Verknüpfungseinrichtung A11 und der zwölften UND-Verknüpfungseinrichtung A12.

Diese Einrichtungen in Fig. 4a-c führen basierend auf den Sensorsignalen Berechnungen und logische Verknüpfungen durch, um daraus das vektorielle Fahrkomfort-Betriebssituationssignal B3 zu bilden.

Mit Bezug auf Fig. 4a kann die erste Komponente B30 des vektorielle Fahrkomfort-Betriebssituationssignals B3 mit dem Schwingungskomfort-Betriebssituationssignal, die sich gegenseitig ausschließenden Zustände B3a, B3b, B3c und B3 annehmen, die bedeuten:
B3a geringe Schwingungsfrequenz/ wellige Strasse, Querfugen, Kanten pos./neg.
B3b hohe Schwingungsfrequenz/wellige Strasse, Querfugen, Kanten pos./neg.
B3c Sportmodus/glatte Strasse
B3d Normalmodus/glatte Strasse

Auf den Zustand B3a wird erkannt, wenn das Ausgangssignal V122 der zwölften Vergleichseinrichtung V12 auf logisch "1" ist. Zur Bildung des Signals V112 wird das Ausgangssignal BP11 des Vertikalbeschleunigungssensors S32 dem ersten Bandpassfilter BP1 mit einem Durchlassbereich von 0,5 bis 2,5 Hz und dem Bandpassfilter BP2 mit einem Durchlassbereich von 10 bis 15 Hz zugeführt. Die so erhaltenen gefilterten Ausgangssignale BP12 bzw. BP22 werden in den Absolutwert-Berechnungseinrichtungen AB2 bzw. AB3 zu Absolutwert-Ausgangssignalen AB22 bzw. AB32 umgewandelt und anschließend den Tiefpassfiltern TP1 bzw. TP2 zugeführt, welche eine spezifische Filtercharakteristik aufweisen. Die tiefpassgefilterten Ausgangssignale TP12 bzw. TP22 werden der zwölften Vergleichseinrichtung V12 als Eingangssignale zugeführt.

Ergibt die Prüfung der zwölften Vergleichseinrichtung V12, dass das niederfrequente Eingangssignal TP12 des Zweiges BP1, AB2, TP1 größer ist als das hochfrequente Eingangssignal TP22 des Zweiges BP2, AB3, TP2 so ist das Ausgangssignal der zwölften Vergleichseinrichtung V12 logisch "1", und der Betriebszustand B3a liegt vor.

Auf den Zustand B3b wird erkannt, wenn das Ausgangssignal A62 der sechsten UND-Verknüpfungseinrichtung A6 auf logisch "1" ist. Dies ist der Fall, wenn das Ausgangssignal N12 der ersten Signalinvertierungseinrichtung N1 und das Ausgangssignal V132 der dreizehnten Vergleichseinrichtung V13 logisch "1" sind.

Das Ausgangssignal N12 der ersten Signalinvertierungseinrichtung N1 ist logisch "12, wenn der Vergleich der zwölften Vergleichseinrichtung V12 ein negatives Resultat, d.h. logisch "0", ergibt und dieses Ausgangssignal V122 durch die erste Signalinvertierungseinrichtung N1 zu logisch "1" invertiert und als Ausgangssignal N12 der sechsten UND-Verknüpfungseinrichtung A6 zugeführt wird.

Das Ausgangssignal V132 der dreizehnten Vergleichseinrichtung V13 ist logisch "1", wenn die Prüfung der dreizehnten Vergleichseinrichtung V13 ergibt, dass das Ausgangssignal TP22 des zweiten Tiefpassfilters TP2 größer als ein vorbestimmter Grenzwert ist.

Auf den Zustand B3c wird erkannt, wenn das Ausgangssignal A72 der siebenten UND-Verknüpfungseinrichtung A7 logisch "1" ist. Dies ist der Fall, wenn das Ausgangssignal V142 der vierzehnten Vergleichseinrichtung V142 und das Ausgangssignal A71 des Sportschaltersensors S31 logisch "1" sind.

Das Ausgangssignal V142 der vierzehnten Vergleichseinrichtung V142 ist logisch "1", wenn die Prüfung der der vierzehnten Vergleichseinrichtung V14 ergibt, dass das Ausgangssignal TP22 des zweiten Tiefpassfilters TP2 kleiner als oder gleich groß wie der vorbestimmte Grenzwert ist.

Auf den Zustand B3d wird erkannt, wenn das Ausgangssignal A82 der achten UND-Verknüpfungseinrichtung A8 logisch "1" ist.

Die achte UND-Verknüpfungseinrichtung A8 empfängt das durch die zweite Signalinvertierungseinrichtung N2 invertierte Signal des Sportschaltersensors S31 als Eingangssignal N22 und das bereits erläuterte Ausgangssignal V142 der vierzehnten Vergleichseinrichtung V14.

Die erste Komponente B30 mit dem Schwingungskomfort-Betriebssituationssignal wird von der Auswerteeinrichtung AE als Betriebszustandssignal an die Priorisierungseinrichtung PR geliefert.

Wird das Schwingungskomfort-Betriebssituationssignal B3a als priorisiertes Betriebssituationssignal PB an die Parameter-Festlegungseinrichtung PF geliefert, so sieht ein entsprechender Einstellparametersatz EPS1 ... EPSn vor, dass der Soll-Stromwert SS1 ... SSn geregelt wird.

Wird das Schwingungskomfort-Betriebssituationssignal B3b als priorisiertes Betriebssituationssignal PB an die Parameter-Festlegungseinrichtung PF geliefert, so sieht ein entsprechender Einstellparametersatz EPS1 ... EPSn vor, dass der Soll-Stromwert SS1 ... SSn geregelt wird.

Wird das Schwingungskomfort-Betriebssituationssignal B3c als priorisiertes Betriebssituationssignal PB an die Parameter-Festlegungseinrichtung PF geliefert, so sieht ein entsprechender Einstellparametersatz EPS1 ... EPSn vor, dass der Soll-Stromwert SS1 ... SSn geregelt wird.

Wird das Schwingungskomfort-Betriebssituationssignal B3d als priorisiertes Betriebssituationssignal PB an die Parameter-Festlegungseinrichtung PF geliefert, so sieht ein entsprechender Einstellparametersatz EPS1 ... EPSn vor, dass der Soll-Stromwert SS1 ... SSn geregelt wird.

Mit Bezug auf Fig. 4b wird die Ermittlung der zweiten Komponente B31 des vektoriellen Fahrkomfort Betriebssituationssignal B3 mit dem Leerlauf-Betriebssituationssignal beschrieben.

Die Ausgangssignale V151 des Geschwindigkeitssensors S33 und V161 des Motordrehzahlsensor S34 werden an die fünfzehnte Vergleichseinrichtung V15 bzw. sechzehnte Vergleichseinrichtung V16 geliefert. Die Vergleichseinrichtungen V15 bzw. V16 ermitteln, ob die Signale V151, V161 kleiner als ein jeweiliger vorbestimmter Grenzwert sind, z.B. 5 km/h und 1000 UpM. Die Ausgangssignale V152, V162 der fünfzehnten und sechzehnten Vergleichseinrichtung V15, V16 werden als Eingangssignale an die neunte UND-Verknüpfungseinrichtung A9 geliefert. Sind beide Signale V152, V162 logisch "1", so wird ein Leerlaufbetriebszustand erkannt und das Leerlauf-Betriebszustandssignal B31 erzeugt.

Wird das Leerlauf-Betriebssituationssignal B31 als priorisiertes Betriebssituationssignal PB an die Parameter-Festlegungseinrichtung PF geliefert, so sieht ein entsprechender Einstellparametersatz EPS1 ... EPSn vor, dass der Soll-Stromwert SS1 ... SSn auf einen Wert entsprechend minimaler Dämpfung/Steifigkeit geregelt wird.

Mit Bezug auf Fig. 4c wird die Ermittlung der dritten Komponente B32 bzw. B33 des vektoriellen Fahrkomfort-Betriebssituationssignal B3 mit dem Tip-In/Tip-Out-Betriebssituationssignal beschrieben.

Das Ausgangssignal D11 des Gaspedalsensors S35 wird in der Differenzierungseinrichtung D1 zeitlich differenziert. Die siebzehnte Vergleichseinrichtung V17 ermittelt, ob das Ausgangssignal D12 der Differenzierungseinrichtung D1 größer als ein vorbestimmter Grenzwert ist. Das entsprechende Ausgangssignal V172 der siebzehnten Vergleichseinrichtung V17 wird an die elfte UND-Verknüpfungseinrichtung A11 angelegt und nimmt den Wert logisch "1" an, falls der Vergleich ein positives Ergebnis erbringt.

Das Ausgangssignal V191 des Geschwindigkeitssensors S33 wird an die neunzehnte Vergleicheinrichtung V19 angelegt.
Wird durch die neunzehnte Vergleicheinrichtung V19 bestimmt, dass das Signal V191 größer als ein vorbestimmter Grenzwert ist, so wird das Ausgangssignal V192 der neunzehnten UND-Verknüpfungseinrichtung V19 logisch "1". Dementsprechend erzeugt die elfte UND-Verknüpfungseinrichtung V11 das Tip-In-Betriebszustandssignal B32.

Ist das Ausgangssignal D12 der Differenzierungseinrichtung D1 kleiner als oder gleich groß wie der vorbestimmte Grenzwert, wie bestimmt durch die achtzehnte Vergleichseinrichtung V18 und gleichzeitig das Signal V191 größer als der vorbestimmte Grenzwert, erzeugt die zwölfte UND-Verknüpfungseinrichtung V12 das Tip-Out-Betriebszustandssignal B32.

Das Tip-In-Betriebszustandssignal B32 beschreibt einen starken positiven Lastwechsel, das Tip-Out-Betriebszustandssignal B33 einen starken negativen Lastwechsel bzw. Lastschlag. Derartige Lastschläge können durch plötzliches Vollgasgeben bzw. Vollgasloslassen erzeugt werden.

Wird das Tip-In-Betriebszustandssignal B32 oder das das Tip-Out-Betriebszustandssignal B33 als priorisiertes Betriebssituationssignal PB an die Parameter-Festlegungseinrichtung PF geliefert, so sieht ein entsprechender Einstellparametersatz EPS1 ... EPSn vor, dass der Soll-Stromwert SS1 ... SSn auf einen Wert entsprechend minimaler Dämpfung/Steifigkeit geregelt wird.

Durch die erläuterte Einstellung der Schwingungseigenschaften der Lagerelemente VLE1 ... VLEn ist es beim vorliegenden Beispiel im Fall der Fahrkomfort-Betriebssituation möglich, den Zwei-Massen-Schwinger Rad-Aufbau-Karosserie zu einem Ein-Massen-Schwinger zu gestalten und ein verbessertes Anfederverhalten für unterschiedliche Frequenzen zu generieren.

Fig. 5 ist ein logisches Blockdiagramm des Geräuscheinleitungs-Situations-Erkennungsblocks E4 der Vorrichtung nach Fig. 1. Der Geräuscheinleitungs-Situations-Erkennungsblock E4 erzeugt das Geräuscheinleitungs-Betriebssituation B4.

In Figur 5 bezeichnet Bezugszeichen S41 einen Geschwindigkeitssensor zum Erfassen der Geschwindigkeit des Fahrzeuges und S42 einen Drehzahlsensor zum Erfassen der Motordrehzahl.

Weiterhin bezeichnen Bezugszeichen V20 bis V23 eine zwanzigste bis dreiundzwanzigste Vergleichseinrichtung und A13 bis A15 eine dreizehnte bis fünfzehnte UND-Verknüpfungseinrichtung. Diese Einrichtungen führen basierend auf den Sensorsignalen Berechnungen und logische Verknüpfungen durch, um daraus das Geräuscheinleitungs-Betriebssituation B4 zu bilden.

V201 bezeichnet das Ausgangssignal des Geschwindigkeitssensors S41 und das Eingangssignal der zwanzigsten Vergleichseinrichtung V20 und der einundzwanzigsten Vergleichseinrichtung V21. V221 bezeichnet das Ausgangssignal des Drehzahlsensors S42 und gleichzeitig das Eingangssignal der zweiundzwanzigsten Vergleichseinrichtung V22 und der dreiundzwanzigsten Vergleichseinrichtung V23. V202 bezeichnet das Ausgangssignal der zwanzigsten Vergleichseinrichtung V20 und gleichzeitig das erste Eingangssignal der dreizehnten UND-Verknüpfungseinrichtung A13. V212 bezeichnet das Ausgangssignal der einundzwanzigsten Vergleichseinrichtung V21 und gleichzeitig das zweite Eingangssignal der dreizehnten UND-Verknüpfungseinrichtung A13. A132 bezeichnet das Ausgangssignal der dreizehnten UND-Verknüpfungseinrichtung A13 und gleichzeitig das erste Eingangssignal der fünfzehnten UND-Verknüpfungseinrichtung A15. V222 bezeichnet das Ausgangssignal der zweiundzwanzigsten Vergleichseinrichtung V22 und gleichzeitig das erste Eingangssignal der vierzehnten UND-Verknüpfungseinrichtung A14. V232 bezeichnet das Ausgangssignal der dreiundzwanzigsten Vergleichseinrichtung V23 und gleichzeitig das zweite Eingangssignal der vierzehnten UND-Verknüpfungseinrichtung A14. A142 bezeichnet das Ausgangssignal der vierzehnten UND-Verknüpfungseinrichtung A14 und gleichzeitig das zweite Eingangssignal der fünfzehnten UND-Verknüpfungseinrichtung A15.

Die Erkennung eines Geräuscheinleitungs-Betriebszustandes und die Ausgabe des Geräuscheinleitungs-Betriebssituationssignals B4 als logisch "1" liegt vor, wenn beide Eingangssignale A132, A142 der fünfzehnten UND-Verknüpfungseinrichtung A15 auf logisch "1" liegen.

Die zwanzigste und einundzwanzigste Vergleichseinrichtung V20 bzw. V21 legen fest, ob das Ausgangssignal V201 des Geschwindigkeitssensors S41 in einem vorbestimmten Geschwinigkeitsbereich, z.B. zwischen 0 und 50km/h, liegt. Ist dies der Fall, liefert die dreizehnte UND-Verknüpfungseinrichtung A13 Ausgangssignal A132 mit dem Wert logisch "1".

Die zweiundzwanzigste und dreiundzwanzigste Vergleichseinrichtung V22 bzw. V23 bestimmen, ob das Ausgangssignal V221 des Drehzahlsensors S42 in einem vorbestimmten Drehzahlbereich, z.B. zwischen 700 und 1500 UpM, ist. Ist dies der Fall, so ist das Ausgangssignal A142 der vierzehnten UND-Verknüpfungseinrichtung A14 ebenfalls logisch "1".

Dann ist das Ausgangssignal der fünfzehnten UND-Verknüpfungseinrichtung ebenfalls logisch "1", und es liegt der Geräuscheinleitungs-Betriebszustand vor, in dem eine bestimmte Geräuscheinleitung stattfinden soll, derentsprechend die Lagerelemente VLE1 ... VLEn einzustellen sind.

Wird das Geräuscheinleitungs-Betriebssituationssignals B4 als priorisiertes Betriebssituationssignal PB an die Parameter-Festlegungseinrichtung PF geliefert, so sieht ein entsprechender Einstellparametersatz EPS1 ... EPSn vor, dass der Soll-Stromwert SS1 ... SSn geregelt wird.

Selbstverständlich kann eine derartige Geräuscheinleitung auch für beliebig viele andere Betriebszustände definiert werden und ist bei dem vorliegenden Beispiel nur einfachheitshalber auf den bestimmten Geschwindigkeits-/ Drehzahlbereich beschränkt.

Fig. 6 ist eine Tabelle der Priorisierungseinrichtung der Vorrichtung nach Fig. 1. BS bezeichnet darin den Betriebszustand und PPV den Prioritätswert.

Bei dieser Prioritätstabelle bezeichnet PPV = 1 die höchste Priorität und PPV = 6 die niedrigste Priorität. Der Betriebszustand B1 weist eine Priorität von 1 auf, der Prioritätszustand B2 eine Priorität von 2. Die Betriebszustände B32 bzw. B33 weisen eine Priorität von 3 auf und die Betriebszustände B3a, B3b, B3c und B34 eine Priorität von 4. Diese Zustände haben alle die gleiche Priorität, da sie nur ausschließlich auftreten können. Der Betriebszustand B31 weist eine Priorität von 5 auf und der Betriebszustand B4 eine Priorität von 6.

Fig. 7 ist ein Zeitablaufdiagramm zur Erläuterung der Funktion der Priorisierungseinrichtung der Vorrichtung nach Fig. 1.

Bei der Darstellung gemäß Figur 7 wird zur Zeit t = 1s das Betriebssituationssignal B1 mit der Priorität 1 von der Betriebssituations-Erkennungseinrichtung SES ausgegeben. Entsprechend wird das Signal B1 als priorisiertes Betriebszustandsignal PB mit der Priorität 1 am Ausgang der Priorisierungseinrichtung PR während einer Zeitspanne dt1 = 1s von einer Sekunde ausgegeben. Zum Zeitpunkt t = 2,5s wird das Betriebssituationssignal B2 in Abwesenheit des Betriebssituationssignals B1 von der Betriebssitautions-Erkennungseinrichtung SES ausgegeben. Dementsprechend wird als priorisiertes Betriebszustandssignal PB das Signal B2 während einer Zeitspanne dt2 = 2s von der Priorisierungseinrichtung PR ausgegeben.

Zur Zeit t = 5s wird wiederum das Betriebssituationssignal B2 in Abwesenheit des Betriebssituationssignals B1 von der Betriebssituations-Erkennungseinrichtung SES ausgegeben und als priorisiertes Betriebszustandssignal PB für eine Zeitspanne dt2' = 1s aufrechterhalten. Da jedoch zum Zeitpunkt t = 6s das Betriebssituationssignal B1 mit der Priorität 1 von der Betriebssituations-Erkennungseinrichtung SES ausgegeben wird, das eine höhere Priorität als das Betriebssituationssignal B2 hat, wird zum Zeitpunkt t = 6s das Signal B1 als priorisiertes Betriebszustandsignal PB mit der Priorität 1 am Ausgang der Priorisierungseinrichtung PR während einer Zeitspanne dt1 = 1s von einer Sekunde ausgegeben.

Da zum Zeitpunkt t = 6,75s erneut das Betriebssituationssignal B1 mit der Priorität 1 von der Betriebssituations-Erkennungseinrichtung SES ausgegeben wird, beginnt die entsprechende Zeitspanne dt1 = 1s zum Zeitpunkt t = 6,75s erneut und endet zum Zeitpunkt t = 7,75s. Dann kehrt der Betriebszustand der Lagerelemente in den besagten Grundzustand zurück, der entweder einstellbar oder fest vorgebbar sein kann.

Obwohl die vorliegende Erfindung vorstehend anhand eines Ausführungsbeispiels beschrieben wurde, ist sie darauf nicht beschränkt. Insbesondere ist offensichtlich das die obigen Beispiele hinsichtlich der Betriebssituationen beliebig modifiziert bzw. anders gestaltet werden können. Selbstverständlich kann auch das Priorisierungsschema anders festegelegt werden. Auch ist die Erfindung nicht auf Motorlagerelemente beschränkt, sondern auf beliebige Lagerelemente anwendbar.

## Patentansprüche

1. Vorrichtung zur betriebssituationsabhängigen Einstellung der Schwingungseigenschaften von Lagerelementen (VLE1 ... VLEn) zur Lagerung eines Aggregats, Insbesondere einer Brennkraftmaschine und/oder eines Getriebes, in einem Kraftfahrzeug mit:
einer Betriebssituations-Erkennungseinrichtung (SES) mit einer Mehrzahl von Betriebssituations-Erkennungsblöcken (E1, E2, E3, E4) zum Erkennen einer entsprechenden Mehrzahl unterschiedlicher Betriebssituationen des Kraftfahrzeuges anhand betriebssituationsspezifischer Eingangssignale und zum Liefern eines entsprechenden jewelligen Betriebssituations-Ausgangssignals (B1, B2, B3, B4);
einer Priorisierungseinrichtung (PR) zum Empfangen der Betriebssituations-Ausgangssignale (B1, B2, B3, B4) und zum zyklischen Festlegen einer Lagereinstellungs-relevanten Betriebssituation gemäß einer vorbestimmten gespeicherten Prioritätsverteilung und zum Liefern eines entsprechenden priorisierten Betriebssituations. Ausgangssignals (PB);
einer Parameter-Festlegungseinrichtung (PF) zum Festlegen eines Einstellparametersatzes (EPS1 ... EPSn) für mindestens ein Lagerelement (VLE1 ... VLEn) basierend auf dem priorisierten Betriebssituations-Ausgangssignal (PB);
einer Einstelleinrichtung (RE) zum Einstellen der Schwingungseigenschaften des Lagerelements (VLE1 ... VLEn) basierend auf dem Einstellparametersatz (EPS1 ... EPSn);
**dadurch gekennzeichnet, dass** die Parameter-Festlegungseinrichtung (PF) mit einem Datenbus (CB) derart gekoppelt ist, dass der Datenbus (CB) ein Modussignal (MS) an die Parameter-Festlegungseinrichtung (PF) geben kann und dass mindestens ein Betriebssituations-Erkennungsblock (E1, E2, E3 bzw. E4) derart ausgebildet ist, dass zum Erkennen mindestens einer Betriebssituation und zum Liefern eines entsprechenden Betriebssituationssignals (B1 bzw. B2 bzw. B3, B30, B31, B32, B33 bzw. B4) ein Signal eines Drucksensors berücksichtigt wird, wobei der Drucksensor zum Messen des Drucks eines magnetorheologischen Fluids in einer Kammer eines Lagerelements (VLE1 ... VLEn) ausgebildet ist.

2. Vorrichtung nach Anspruch 1, **dadurch gekennzeichnet, dass** das Lagerelement (VLE1 ... VLEn) eine durch Anlegen eines Stromes veränderliche Steifigkeit (21 ... 2n) und/oder Dämpfung (11 ... 1n) aufweist und die Einstelleinrichtung (RE) eine Reglereinrichtung ist, die ausgelegt ist, eine Regelung auf einen Soll-Stromwarts (SS1 ... SSn) gemäß dem Einstellparametersatz (EPS1 ... EPSn) durchzuführen,

3. Vorrichtung nach Anspruch 2, **dadurch gekennzeichnet, dass** der Einstellparametersatz (EPS1 ... EPSn) eine Regeldauer (dt1, dt2) und ein oder mehrere Regelkonstanten umfasst.

4. Vorrichtung nach einem der Ansprüche 1 bis 3, **dadurch gekennzeichnet, dass** eine Bewegungsrichtungs-Erfassungseinrichtung (31 ... 3n) zum Erfassen der Bewegungsrichtung des Lagerelements (VLE1 ... VLEn) vorgesehen ist und der Einstellparametersatz (EPS1 ... EPSn) bewegungsrichtungsabhängig ist.

5. Vorrichtung nach einem der Ansprüche 1 bis 4, **dadurch gekennzeichnet, dass** der Parameter-Festlegungseinrichtung (PF) ein Modussignal (MS) zum Festlegen des Einstellparametersatzes (EPS1 ... EPSn) unter Berücksichtigung des Modussignals (MS) zuführbar ist.

6. Vorrichtung nach einem der Ansprüche 1 bis 5, **dadurch gekennzeichnet, dass** die Betriebssituations-Erkennungsblöcke (E1, E2, E3, E4) einen ersten Betriebssituations-Erkennungsblock (E1) zum Erkennen mindestens einer Traktions-Betriebssituation aufweist.

7. Vorrichtung nach einem der Ansprüche 1 bis 6, **dadurch gekennzeichnet, dass** die Betriebssituations-Erkennungsblöcke (E1, E2, E3, E4) einen zweiten Betriebssituations-Erkennungsblock (E2) zum Erkennen mindestens einer Handling-Betriebssituation aufweist.

8. Vorrichtung nach einem der Ansprüche 1 bis 7, **dadurch gekennzeichnet, dass** die Betriebssituations-Erkennungsblöcke (E1, E2, E3, E4) einen dritten Betriebssituations-Erkennungsblock (E3) zum Erkennen mindestens einer Fahrkomfort-Betriebssituation aufweist.

9. Vorrichtung nach einem der Ansprüche 1 bis 8, **dadurch gekennzeichnet, dass** die Betriebssituations-Erkennungsblöcke (E1, E2, E3, E4) einen vierten Betriebssituations-Erkennungsblock (E4) zum Erkennen mindestens einer Geräuscheinleitungs-Betriebssituation aufweist.

10. Vorrichtung nach einem der Ansprüche 1 bis 9, **dadurch gekennzeichnet, dass** die Prioritätsverteilung als Tabelle in der Priorisierungseinrichtung (PR) gespeichert ist.

11. Vorrichtung nach einem der Ansprüche 1 bis 10, **dadurch gekennzeichnet, dass** die betriebssituationsspezifischen Eingangssignale von einer einem oder mehreren Sensoren (S1 ... Sn) und/oder einem oder mehreren Steuergeräten (ST1 ... STn) bereitstellbar sind.

12. Verfahren zur betriebssituationsabhängigen Einstellung der Schwingungseigenschaften von Lagerelementen (VLE1 ... VLEn) zur Lagerung eines Aggregats, insbesondere einer Brennkraftmaschine und/oder eines Getriebes, in einem Kraftfahrzeug mit den Schritten:
Erkennen einer entsprechenden Mehrzahl unterschiedlicher Betriebssituationen des Kraftfahrzeuges anhand betriebssituationsspezifischer Signale;
zyklisches Festlegen einer Lagereinstellungs-relevanten Betriebssituation gemäß einer vorbestimmten Prioritätsverteilung;
Festlegen eines Einstellparametersatzes (EPS1 ... EPSn) für mindestens ein Lagerelement (VLE1 ... VLEn) basierend auf der Lagereinstellungs-relevanten Betriebssituation ;
**dadurch gekennzeichnet, dass** ein Einstellparametersatz (EPS1 ... EPSn) für mindestens ein Lagerelement (VLE1 ... VLEn) unter Berücksichtigung eines von einem Datenbus (CB) gegebenen Modussignal (MS) festgelegt wird und dass beim Erkennen mindestens einer Betriebssituation und Liefern eines entsprechenden Betriebssituationssignals (B1 bzw. B2 bzw. B3, B30, B31, B32, B33 bzw. B4) ein Signal eines Drucksensors berücksichtigt wird, wobei der Drucksensor zum Messen des Drucks eines magnetorheologischen Fluids in einer Kammer eines Lagerelements (VLE1 ... VLEn) ausgebildet ist.

## Claims

1. Device for adjusting, according to the operating situation, the vibrational properties of bearing elements (VLE1 ... VLEn) for mounting a unit, especially an internal combustion engine and/or a transmission, in a motor vehicle, having:
an operating-situation-detection device (SES) having a multiplicity of operating-situation-detection blocks (E1, E2, E3, E4) for detecting a corresponding multiplicity of different operating situations of the motor vehicle on the basis of operating-situation-specific input signals, and for supplying a corresponding respective operating-situation output signal (B1, B2, B3, B4) ;
a prioritization device (PR) for receiving the operating-situation output signals (B1, B2, B3, B4) and
for cyclically defining a bearing-adjustment-relevant operating situation according to a predetermined stored priority distribution, and for supplying a corresponding, prioritized operating-situation output signal (PB);
a parameter-defining device (PF) for defining an adjustment parameter set (EPS1 ... EPSn) for at least one bearing element (VLE1 ... VLEn) on the basis of the prioritized operating-situation output signal (PB);
and
an adjustment device (RE) for adjusting the vibrational properties of the bearing element (VLE1 ... VLEn) on the basis of the adjustment parameter set (EPS1 ... EPSn);
**characterized in that** the parameter-defining device (PF) is coupled to a data bus (CB) in such a way that the data bus (CB) can send a mode signal (MS) to the parameter-defining device (PF), and **in that** at least one operating-situation-detection block (E1, E2, E3 or
E4) is embodied in such a way that a signal of a pressure sensor is taken into account for the detection of at least one operating situation and for supplying a corresponding operating-situation signal (B1 or B2 or B3, B30, B31, B32, B33 or B4), wherein the pressure sensor is designed to measure the pressure of a magnetorheological fluid in a chamber of a bearing element (VLE1 ... VLEn).

2. Device according to Claim 1, **characterized in that** the bearing element (VLE1 ... VLEn) has rigidity (21 ... 2n) and/or damping (11 ... 1n) which can be varied by applying a current, and the adjustment device (RE) is a regulator device which is configured to carry out regulation to a setpoint current value (SS1 ... SSn) according to the adjustment parameter set (EPS1 ... EPSn) .

3. Device according to Claim 2, **characterized in that** the adjustment parameter set (EPS1 ... EPSn) comprises a regulating duration (dt1, dt2) and one or more regulating constants.

4. Device according to one of Claims 1 to 3, **characterized in that** a movement-direction-sensing device (31 ... 3n) for sensing the movement direction of the bearing element (VLE1 ... VLEn) is provided, and the adjustment parameter set (EPS1 ... EPSn) is movement-direction-dependent.

5. Device according to one of Claims 1 to 4, **characterized in that** a mode signal (MS) for defining the adjustment parameter set (EPS1 ... EPSn) taking into account the mode signal (MS) can be fed to the parameter-defining device (PF).

6. Device according to one of Claims 1 to 5, **characterized in that** the operating-situation-detection blocks (E1, E2, E3, E4) have a first operating-situation-detection block (E1) for detecting at least one traction operating situation.

7. Device according to one of Claims 1 to 6, **characterized in that** the operating-situation-detection blocks (E1, E2, E3, E4) have a second operating-situation-detection block (E2) for detecting at least one handling operating situation.

8. Device according to one of Claims 1 to 7, **characterized in that** the operating-situation-detection blocks (E1, E2, E3, E4) have a third operating-situation-detection block (E3) for detecting at least one driving comfort operating situation.

9. Device according to one of Claims 1 to 8, **characterized in that** the operating-situation-detection blocks (E1, E2, E3, E4) have a fourth operating-situation-detection block (E4) for detecting at least one noise-introduction operating situation.

10. Device according to one of Claims 1 to 9, **characterized in that** the priority distribution is stored as a table in the prioritization device (PR).

11. Device according to one of claims 1 to 10, **characterized in that** the operating-situation-specific input signals can be made available by one or more sensors (S1 ... Sn) and/or one or more control units (ST1 ... STn).

12. Method for adjusting, according to the operating situation, the vibrational properties of bearing elements (VLE1 ... VLEn) for mounting a unit, especially an internal combustion engine and/or a transmission, in a motor vehicle having the steps:
detecting a corresponding multiplicity of operating situations of the motor vehicle on the basis of operating-situation-specific signals;
cyclically defining a bearing-adjustment-relevant operating situation according to a predetermined priority distribution;
defining an adjustment parameter set (EPS1 ... EPSn) for at least one bearing element (VLE1 ... VLEn) on the basis of the bearing-adjustment-relevant operating situation;
**characterized in that** an adjustment parameter set (EPS1 ... EPSn) for at least one bearing element (VLE1 ... VLEn) is defined taking into account a mode signal (MS) which is set by a data bus (CB), and **in that** when at least one operating situation is detected and a corresponding operating situation signal (B1 or B2 or B3, B30, B31, B32, B33 or B4) is supplied, a signal of a pressure sensor is taken into account wherein the pressure sensor for measuring the pressure of a magnetorheological fluid is formed in a chamber of a bearing element (VLE1 ... VLEn).

## Revendications

1. Ensemble pour établir en fonction de la situation de fonctionnement les propriétés de vibration d'éléments de palier (VLE1 ... VLEn) utilisés pour le montage d'une machine, en particulier d'un moteur à combustion interne et/ou d'une transmission, dans un véhicule automobile, l'ensemble présentant :
un dispositif (SES) de reconnaissance de situation de fonctionnement qui présente plusieurs blocs (E1, E2, E3, E4) de reconnaissance de situation de fonctionnement qui reconnaissent un nombre correspondant de situations différentes de fonctionnement du véhicule automobile à l'aide de signaux d'entrée spécifiques à la situation de fonctionnement et qui délivrent un signal de sortie correspondant (B1, B2, B3, B4) de situation de fonctionnement,
un dispositif de priorisation (PR) qui reçoit les signaux de sortie (B1, B2, B3, B4) de situation, de fonctionnement, qui définit cycliquement une situation de fonctionnement en termes de réglage des paliers en fonction d'une répartition de priorité prédéterminée et conservée en mémoire et qui délivre un signal priorisé de sortie (PB) correspondant de situation de fonctionnement,
un dispositif (PF) de définition de paramètres qui définit un jeu (EPS1 ... EPSn) de paramètres de réglage pour au moins un élément de palier (VLE1.... VLEn) sur la base du signal (PB) de sortie priorisé de situation de fonctionnement et
un dispositif de réglage (RE) qui règle les propriétés de vibration de l'élément de palier (VLE1 .... VLEn) sur la base du jeu (EPS1 ... EPSn) de paramètres de réglage,
**caractérisé en ce que**
le dispositif (PF) de définition de paramètres est raccordé à un bus de données (CB) de telle sorte que le bus de données (CB) puisse délivrer un signal de mode (MS) au dispositif (PF) de définition de paramètres,
**en ce qu'**au moins un bloc (E1, E2, E3 ou E4) de reconnaissance de situation de fonctionnement est configuré de telle sorte qu'un signal d'un capteur de pression est pris en compte pour la reconnaissance d'au moins une situation de fonctionnement et pour délivrer un signal correspondant (B1 ou B2 ou B3, B30, B31, B32, B33 ou B4) de situation de fonctionnement et
**en ce que** le capteur de pression est configuré pour mesurer la pression d'un fluide magnétorhéologique dans une chambre d'un élément de palier (VLE1 ... VLEn).

2. Ensemble selon la revendication 1, **caractérisé en ce que** l'élément de palier (VLE1 ... VLEn) présente une rigidité (21 ... 2n) et/ou un amortissement (11 ... 1n) qui peuvent être modifiés par l'application d'un courant et **en ce que** le dispositif de réglage (RE) est un dispositif à régulateur conçu pour exécuter une régulation sur une valeur de consigne de courant (SS1 ... SSn) en fonction du jeu (EPS1 ... EPSn) de paramètres de réglage.

3. Ensemble selon la revendication 2, **caractérisé en ce que** le jeu (EPS1 ... EPSn) de paramètres de réglage comporte une durée de régulation (dt1, dt2) et une ou plusieurs constantes de régulation.

4. Ensemble selon l'une des revendications 1 à 3, **caractérisé en ce qu'**un dispositif (31 ... 3n) de reconnaissance de direction de déplacement est prévu pour reconnaître la direction de déplacement de l'élément de palier (VLE1 ... VLEn) et **en ce que** le jeu (EPS1 ... EPSn) de paramètres de réglage dépend de la direction du déplacement.

5. Ensemble selon l'une des revendications 1 à 4, **caractérisé en ce qu'**un signal de mode (MS) peut être apporté au dispositif (PF) de définition de paramètres pour définir le jeu (EPS1 ... EPSn) de paramètres de réglage en tenant compte du signal de mode (MS).

6. Ensemble selon l'une des revendications 1 à 5, **caractérisé en ce que** les blocs (E1, E2, E3, E4) de reconnaissance de situation de fonctionnement présentent un premier bloc (E1) de reconnaissance de situation de fonctionnement qui reconnaît au moins la situation de fonctionnement en traction.

7. Ensemble selon l'une des revendications 1 à 6, **caractérisé en ce que** les blocs (E1, E2, E3, E4) de reconnaissance de situation de fonctionnement présentent un deuxième bloc (E2) de reconnaissance de situation de fonctionnement qui reconnaît au moins la situation de fonctionnement en manoeuvre.

8. Ensemble selon l'une des revendications 1 à 7, **caractérisé en ce que** les blocs (E1, E2, E3, E4) de reconnaissance de situation de fonctionnement présentent un troisième bloc (E3) de reconnaissance de situation de fonctionnement qui reconnaît au moins la situation de fonctionnement en confort de roulage.

9. Ensemble selon l'une des revendications 1 à 8, **caractérisé en ce que** les blocs (E1, E2, E3, E4) de reconnaissance de situation de fonctionnement présentent un quatrième bloc (E4) de reconnaissance de situation de fonctionnement qui reconnaît au moins la situation de fonctionnement en production de bruit.

10. Ensemble selon l'une des revendications 1 à 9, **caractérisé en ce que** la répartition de priorité est conservée en mémoire dans le dispositif de priorisation (PR) sous la forme d'un tableau.

11. Ensemble selon l'une des revendications 1 à 10, **caractérisé en ce que** les signaux d'entrée spécifiques à une situation de fonctionnement peuvent être délivrés par un ou plusieurs capteurs (S1 ... Sn) et/ou un ou plusieurs appareils de commande (ST1 ... STn).

12. Procédé de réglage en fonction d'une situation de fonctionnement des propriétés de vibration d'éléments de palier (VLE1 ... VLEn) utilisés pour monter une machine, en particulier un moteur à combustion interne et/ou une transmission, dans un véhicule automobile, le procédé comportant les étapes qui consistent à :
reconnaître un nombre correspondant de situations différentes de fonctionnement du véhicule automobile à l'aide de signaux spécifiques à la situation de fonctionnement,
définir cycliquement une situation de fonctionnement en termes de réglage des paliers en fonction d'une répartition de priorité prédéterminée,
définir un jeu (EPS1 ... EPSn) de paramètres de réglage pour au moins un élément de palier (VLE1 ... VLEn) sur la base du signal de sortie pertinent de situation de fonctionnement,
**caractérisé en ce que**
un jeu (EPS1 ... EPSn) de paramètres de réglage est défini pour au moins un élément de palier (VLE1 ... VLEn) en tenant compte d'un signal de mode (MS) délivré par un bus de données (CB),
**en ce qu'**un signal d'un capteur de pression est pris en compte pour la reconnaissance d'au moins une situation de fonctionnement et pour la sortie d'un signal correspondant (B1 ou B2 ou B3, B30, B31, B32, B33 ou B4) de situation de fonctionnement et
**en ce que** le capteur de pression est configuré pour mesurer la pression d'un fluide magnétorhéologique dans une chambre d'un élément de palier (VLE1 ... VLEn).
